(19) Europäisches Patentamt
European Patent Office
Office européen des brevets

(11)  EP 2 459 624 B1

(12)  EUROPEAN PATENT SPECIFICATION

(45) Date of publication and mention
of the grant of the patent:
**02.09.2015  Bulletin 2015/36**

(21) Application number: **10805035.2**

(22) Date of filing: **29.07.2010**

(51) Int Cl.:
*C08J 5/18* (2006.01)         *C08J 7/18* (2006.01)
*B32B 27/08* (2006.01)        *B65D 81/34* (2006.01)
*H05B 6/64* (2006.01)

(86) International application number:
**PCT/US2010/043677**

(87) International publication number:
**WO 2011/014630 (03.02.2011 Gazette 2011/05)**

(54)  **LOW CRYSTALLINITY SUSCEPTOR FILMS**

SUSZEPTORFILME VON GERINGER KRISTALLINITÄT

FILMS DE SUSCEPTEUR À FAIBLE CRISTALLINITÉ

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.07.2009  US 273090 P
26.08.2009  US 236925 P
22.02.2010  US 709628**

(43) Date of publication of application:
**06.06.2012  Bulletin 2012/23**

(60) Divisional application:
**15168788.6**

(73) Proprietor: **Graphic Packaging International, Inc.
Marietta, GA 30067 (US)**

(72) Inventors:
• **MIDDLETON, Scott, W.
Oshkosh, WI 54904 (US)**
• **BOHRER, Timothy, H.
Chicago, IL 60615 (US)**
• **SLOAT, Jeffrey, T.
Broomfield, CO 80020 (US)**
• **GILPATRICK, William
Broomfield, CO 80020 (US)**
• **SINCLAIR, Mark
Arvado, CO 80021 (US)**

(74) Representative: **Grättinger Möhring von
Poschinger
Patentanwälte Partnerschaft
Wittelsbacherstrasse 2b
82319 Starnberg (DE)**

(56) References cited:
**WO-A1-01/38907          WO-A1-93/09945
US-A- 4 894 503          US-A- 5 039 001
US-A- 5 519 196          US-A1- 2002 039 235
US-A1- 2006 272 766      US-A1- 2007 145 045
US-A1- 2008 087 664      US-A1- 2008 145 666
US-A1- 2008 197 128**

**Description**

BACKGROUND

It is known to use a susceptor in microwave heating packages for enhancing the browning and/or crisping of an adjacent food item. In one embodiment, a susceptor is a thin layer of microwave energy interactive material that tends to absorb at least a portion of impinging microwave energy and convert it to thermal energy (i.e., heat) through resistive losses in the layer of microwave energy interactive material. The remainder of the microwave energy is either reflected by or transmitted through the susceptor. Typical susceptors comprise aluminum, generally less than about 500 angstroms in thickness, for example, from about 60 to about 100 angstroms in thickness, and having an optical density of from about 0.15 to about 0.35, for example, about 0.17 to about 0.28.

The layer of microwave energy interactive material (i.e., susceptor) is typically supported on a polymer film to define a susceptor film. The susceptor film is typically joined (e.g., laminated) to a support layer, for example, paper or paperboard, using an adhesive or otherwise, to impart dimensional stability to the susceptor film and to protect the layer of metal from being damaged. The resulting structure may be referred to as a "susceptor structure".

The first commercial microwave susceptor films, and subsequently introduced susceptor packages have relied upon the use of highly oriented, highly crystallized, biaxially oriented and heat set films produced from polyethylene terephthalate polymer, or PET. Typically, such films are highly oriented, that is, the degree of stretch during the orienting process is from about 3.5:1 to about 4:1 in the machine direction (MD) and from about 3.5:1 to about 4:1 in the cross-machine direction (CD). Biaxially oriented PET films made from this polymer are commonly used in a wide variety of packaging and non-packaging uses where combinations of some or all of clarity, gloss, smoothness, a good combination of moisture vapor and oxygen barrier, good mechanical strength and modest dimensional heat stability are useful. Commercially available films that are used in standard susceptor structures typically comprise films of this general description, whose properties have generally been optimized for high volume applications other than for use in microwave susceptors.

There are several key elements of this standard construction that may limit the heating performance of these films, and hence of microwave susceptor packages, packaging components or composite susceptor and field modification or shielding packages or components. There is a wide understanding of those skilled in the art of making microwave susceptor packaging of the phenomenon of self-limiting heating, commonly referred to as crazing. During heating induced in the susceptor layer itself resulting from interaction of the susceptor material with either or both the electrical or magnetic components of the electromagnetic microwave energy, the temperature of the susceptor substrate film is raised. While not wishing to be bound by theory, and for this discussion, using the example of a vacuum metallized metal deposited on a biaxially oriented film and interacting principally with the electrical component of the microwave energy, it is believed that when the residual shrink forces in the susceptor substrate film exceed the ability of the adhesive/support substrate to hold the susceptor substrate film in its original and desired configuration, cracks appear in the susceptor substrate film, causing discontinuities in the microwave interactive susceptor material that interrupt the flow of electric current in the metal layer. As the crazing progresses and the cracks intersect one another, the network of intersecting lines subdivides the plane of the susceptor into progressively smaller conductive islands. As a result, the overall reflectance of the susceptor decreases, the overall transmission of the susceptor increases, and the amount of energy converted by the susceptor into sensible heat decreases.

When this self-limiting behavior occurs prematurely (i.e., too early in the heating cycle), the susceptor may not be able to generate the necessary amount of heat for a particular food heating application. In contrast, in some instances, this self-limiting behavior may be advantageous where runaway (i.e., uncontrolled) heating of the susceptor might otherwise cause excessive charring or scorching of the adjacent food item and/or any supporting structures or substrates, for example, paper or paperboard. Thus, for each application, the need for sufficient heating must be balanced with the desire to prevent undesirable overheating. Unfortunately, with a conventional highly oriented PET susceptor, the temperature at which crazing occurs can only be slightly controlled, for example, by modifying the thickness of the metal layer, the type and amount of adhesive, and the uniformity of the adhesive application.

Delaying the onset of crazing in susceptor structures has been the subject of significant efforts, but little or no meaningful improvements have been achieved using traditional thinking. However, significant and previously unanticipated changes to the base polymeric materials used and/or the way they are processed into films are shown in this invention to result in higher temperature or delayed onset of crazing and controllably higher microwave heating potential.

To understand the uniqueness of the approaches taken in the present disclosure, it is instructive to first review previous attempts to create improved heating susceptor films through modifications to ways in which these films are produced. A discussion of film characterization also reveals new understanding that supports the uniqueness of the aspects of the current invention.

Since the biaxial orientation hardware used to make standard PET susceptor substrate films provide the ability to heat condition, or heat set the highly oriented film at controlled temperatures, it has been an objective of some investigators to increase heat setting temperatures and dwell times to achieve films with more dimensional stability at elevated temperatures. For example, commonly assigned U.S. Patent Nos. 4,851,632, 4,993,526, 5,003,142, and 5,177,332 and U.S. Patent Application Publication No. 2007/0084860 A1 disclose the use of "heat-stabilized PET" film, which is defined in U.S. Patent No. 5,177,632 as "PET which is treated so as to shrink less than about 2% when heated to 150°C. for thirty minutes. Preferably it will shrink less than about 1.5% or 1% when so heated, and most preferably about 0.6% or less." According to U.S. Patent No. 5,177,132, "[h]eat stabilized PET is made from a regular grade of PET film by a stabilization process involving a series of heat treatment and relaxation steps, and is well known to those skilled in the art. A heat stabilization process for PET is more fully described in Bulletin E-50542, "Thermal Stabilization of Mylar®," from E. I. Du Pont de Nemours and Company." Although this bulletin is not publically available for examination, it is clear from the context of its description, particularly in U.S. Patent No. 5,177,332, that the heat stabilization process includes supplemental heat treatment beyond that normally provided in the production of 'ordinary PET film', and that in all cases PET or PET film refers to film that is biaxially oriented.

Other investigators have attempted to utilize higher melting point (i.e., melting temperature) polymers to achieve higher heating performance (see, for example, U.S. Patent No. 5,571,627, which teaches the use of biaxially oriented susceptor substrate films having onset of melting in a range of approximately 260°C to 300°C, or U.S. Patent No. 5,126,519, which teaches the use of films made from PCTA copolyester with melting point greater than 500°C). Polyethylene naphthalate and certain copolyesters such as polycyclohexylene-dimethylene terephthalate (PCDMT), which have inherently higher melting points, have also been disclosed (see, for example, U.S. Patent Nos. 5,527,413 and 5,571,627). Despite claims of improved heating performance, it is believed that susceptors using these films have not proven suitable for commercial use. Difficulties encountered have included excessive additional cost, fabrication problems, and uncontrolled heating leading to unacceptable scorching or burning of the food, the package or package components, or both. For example, U.S. Patent No. 5,527,413 discloses that PCDMT becomes so hot that it can burn or char the paper in the susceptor structure or burn food items in contact with the susceptor. Accordingly, it is believed that the use of higher melting point copolyesters has not proven satisfactory in creating commercially useful susceptor films.

Thus, there is a need for a susceptor structure that is capable of controllably achieving a greater heat flux and/or higher temperature than conventional susceptor structures, thereby permitting better browning and/or crisping of a food item without the danger of excessive charring.

In related U.S. Patent Application No. 12/709,628, it was recognized that unoriented films, for example, amorphous polyethylene terephthalate (APET) films, could be used in susceptor films that have heating properties that are superior to those of conventional, biaxially oriented PET film susceptors. However, it was also recognized that the APET film may lack sufficient strength for processing. Accordingly, the inventors proposed various means of increasing the strength of the APET film. Nonetheless, there remains a need for alternate susceptor base films and susceptor structures formed therefrom.

## SUMMARY

This disclosure is directed generally to a polymer film (or film) for use as a base film or substrate in a susceptor film, a method of making such a polymer film, and a susceptor film including the polymer film. The susceptor film may be joined to a support layer to form a susceptor structure. The susceptor film and/or susceptor structure may be used to form countless microwave energy interactive structures, microwave heating packages, or other microwave energy interactive constructs.

The susceptor structure may generally have a browning reaction rate that exceeds the browning reaction rate of a susceptor structure made from a conventional biaxially oriented PET film. Accordingly, the present susceptor structure may provide a noticeable improvement in browning and/or crisping of a food item heated using the susceptor structure.

The polymer film may be unoriented or oriented to varying degrees. Where the film is oriented, the orientation conditions may be customized to provide a desired level of crystallinity, residual orientation, and therefore, desired heating performance for a particular susceptor film application. The film may be characterized as having one or more of the following: a refractive index ($n_z$) of less than about 1.64; a birefringence ($n_z$-$n_x$) of less than about 0.15; and a crystallinity of less than about 50%. However, other crystallinities, refractive indexes, birefringences, and ranges of each may be suitable in some cases. By comparison, commercial biaxially oriented homopolymer films typically used in susceptors may have a refractive index ($n_z$) of from about 1.6447 to about 1.6639, and a birefringence ($n_z$-$n_x$) of from about 0.1500 to about 0.1700.

It has been discovered that polymer films having a relatively low crystallinity, orientation, and/or residual shrink forces may be used in susceptor films and susceptor structures to achieve a greater heat flux and/or higher temperature than conventional susceptor structures. Furthermore, the present inventors have gained an appreciation for the relationship between various base materials, process conditions, and the crystallinity of the resulting film. As a result, the degrees of freedom in designing base films and the resulting susceptor structures have been dramatically increased.

In some exemplary embodiments, the polymer film may comprise amorphous polyethylene terephthalate (APET), amorphous nylon, various copolyesters, or any combination thereof. The copolyester may generally have a melting temperature similar to or lower than that of standard PET polymer, for example, less than about 250°C to 260°C. However, numerous other polymers are contemplated.

If desired, one or more additives (i.e., polymers) may be incorporated into the polymer film to enhance the strength and/or processability of the polymer film. Additionally or alternatively, the strength and/or processability of the polymer film may be enhanced by using a multilayer polymer film, where one or more of such layers provide the desired level of robustness for the polymer film. Accordingly, the multilayer film may feature enhanced tear strength, toughness, and improved dimensional tolerance so that the film may be processed (e.g., metallized, chemically etched, laminated, and/or printed) and converted into various susceptor structures and/or packages using high speed converting operations.

If desired, additional functional characteristics can be imparted to the multilayer film by selecting polymers having the desired attributes. For example, the multilayer film may have barrier characteristics that may render the polymer film suitable for numerous applications, for example, for packages for refrigerated microwavable food items that require an extended shelf life.

Other features, aspects, and embodiments of the invention will be apparent from the following description.

BRIEF DESCRIPTION OF THE FIGURES

The description refers to the accompanying figures in which:

**FIG. 1** presents the refractive index ($n_z$) and rise in temperature ($\Delta T$) in °C for various exemplary susceptor base films and susceptor structures;
**FIG. 2** presents the relative browning reaction rate and pizza browning pixel count for various exemplary susceptor structures;
**FIG. 3** presents the refractive index ($n_z$) and rise in temperature ($\Delta T$) in °C for various exemplary susceptor base films and susceptor structures;
**FIG. 4** presents the relative browning reaction rate and pizza browning pixel count for various exemplary susceptor structures;
**FIG. 5** presents the dynamic dimensional temperature response for susceptor base film 6-2;
**FIG. 6** presents the dynamic dimensional temperature response for susceptor base film 1-6;
**FIG. 7** presents the dynamic dimensional temperature response for susceptor base film 7-1;
**FIG. 8** presents the dynamic dimensional temperature response for susceptor base film 6-9;
**FIG. 9** presents the dynamic dimensional temperature response for susceptor base film 6-11; and
**FIG. 10** presents the dynamic dimensional temperature response for susceptor base film 7-8.

DESCRIPTION

This disclosure is directed generally to polymer films (or films) for use as a base film or substrate in susceptor films, a method of making such polymer films, and susceptor films and structures including the polymer film.

In one aspect, the base film may generally have a crystallinity of less than about 50% prior to heating in a microwave oven. In each of various independent examples, the polymer film may have a crystallinity of less than about 40%, less than about 37%, less than about 30%, less than about 25%, less than about 20%, less than about 15%, less than about 10%, less than about 7%, or about 5%.

The present inventors have determined that low crystallinity films made in a variety of ways may be superior base films when compared to their highly crystalline counterparts. Specifically, it has been discovered that lower crystallinity and lower residual orientation levels generally correspond to higher heating capability in the resulting susceptor film and/or susceptor structure, even where the base film has a high absolute orientation level similar to a conventional base film. This presents a significant departure from the conventional use of highly oriented, highly crystalline susceptor films. While some attempts to understand the self-limiting behavior of susceptors have been made, it is believed that the relationship between the crystallinity and dynamic dimensional temperature response characteristics of oriented films used for microwave susceptor films and the resulting susceptor performance has generally not been explored or appreciated by others.

In another aspect, it has also been discovered that, in many cases, the refractive index and/or the birefringence of the polymer film may be more indicative of performance than the criteria set forth in the prior art. The refractive index of a material is the ratio of the velocity of light in a vacuum to the velocity of light in that material. By polarizing light in a particular direction of a material, one can measure the refractive index in that direction. For amorphous materials with no molecular ordering, a single value can be used to optically define that material. For materials capable of molecular orientation, such as semi-crystalline polymers, the absolute value of refractive index increases with increasing crystallinity and orientation, and the different values of refractive indexes that will be measured in different directions may be used to characterize anisotropy of a structure such as a film. The difference between refractive indexes in two directions of a polymer film is defined as the birefringence between those two directions and can be used to understand differences in orientation between these directions. Since it is defined as a difference between the values of refractive index between two directions, birefringence may be a positive or negative number depending the morphology of a particular sample and the directions chosen for the refractive indexes; higher absolute values of birefringence are widely acknowledged to be associated with greater differences in orientation in those two directions.

Some polymer films useful for forming susceptor structures according to the disclosure may generally have a refractive index ($n_z$) (where $n_z$ refers to the refractive index in the machine direction of the film) of less than about 1.64, for example, from about 1.57 to about 1.62. In each of various independent examples, the polymer film may have a refractive index ($n_z$) of less than about 1.63, less than about 1.62, less than about 1.61, less than about 1.60, less than about 1.59, or less than about 1.58. Additionally or alternatively, the polymer films may generally have a birefringence ($n_z$-$n_x$) (where $n_x$ refers to the refractive index in the thickness of the film) of less than about 0.15 (including negative birefringence values). In each of various independent examples, the birefringence ($n_z$-$n_x$) may be less than about 0.14, less than about 0.13, less than about 0.12, less than about 0.11, less than about 0.10, less than about 0.090, less than about 0.080, less than about 0.070, less than about 0.060, less than about 0.050, less than about 0.040, less than about 0.030, less than about 0.020, less than about 0.015, less than about 0.010, or less than about 0.0050. However, other suitable refractive indexes, birefringence values, and ranges thereof are contemplated.

As discussed above, prior art films have typically been characterized based on their static shrink properties (e.g., '1% shrink at 150°C for 30 min'). However, the present inventors have determined that this traditional performance definition may be inadequate and misleading, and that specifying and producing susceptor substrate films using this definition as a primary criteria for selecting materials and processes has possibly limited the development of superior performing microwave susceptor substrate films, susceptor components, susceptor packages and susceptor package/field modification or shielding packages and components.

The present inventors have discovered that to realistically characterize the microwave heating behavior of susceptor structures, one must understand the dimensional response of susceptor substrate films to dynamic temperature exposure, which is more representative of the actual conditions experienced during microwave heating using susceptor structures. This understanding has been discovered to be particularly useful for designing superior susceptor substrate films and useful microwave heating structures for food applications or other industrial uses.

For heating of food, this may be of great significance, since the browning and crisping changes in the food to be microwave heated in these susceptor packages, and which are highly desired quality parameters by consumers, often rely heavily on the Maillard browning reaction to achieve natural and appealing surface color change as well as aroma and flavor development, and on surface moisture content changes to achieve crisper texture and mouth feel. The progression of the Maillard reaction is also associated with lower water activity in the food than is typically present at the start of cooking. Since the kinetics of the Maillard reaction begin to reach reaction rates useful to achieve browning in time frames of interest for susceptor packages above 155°C and increase as a power function with increasing temperature, for the desired short cooking times in the microwave oven, increasing the temperature is highly beneficial to both aspects of the Maillard reaction, lower water activity and increased kinetics.

Notably, as will be discussed further in connection with the examples, many of the films described in the prior art as being superior (e.g., as meeting the definition of 'heat stabilized PET' in U.S. Patent No. 5,177,132) show little if any improvement over standard susceptor structures using standard biaxially oriented PET film, and are eclipsed by the performance of the susceptor structures made from the base films of the present disclosure. For example, films that exhibit shrink on the order of 1% at 150°C for 30 minutes yield susceptor films that exhibit typical limiting and crazing behavior that the present films overcome. The inventors have measured the dynamic dimensional temperature response of example susceptor structures produced from 'heat stabilized PET' claimed to offer improved susceptor performance and show it to be inferior in stability at useful microwave heating conditions compared to those of the present disclosure. Thus, the typical method of characterizing heating potential by long term exposure to a temperature that is at best at the low end of temperatures of interest for microwave susceptor heating is inconsistent with developing an understanding of the actual heating performance achieved during the actual event of interest, the heating of microwave foods in microwave ovens, which is a dynamic process in which it is very often desired that susceptor package components reach temperatures significantly in excess of the typical 150°C static test condition.

In view of the above discoveries, the present inventors have determined that a vast array of materials and processes can be used to form susceptor base films having properties that result in superior heating performance under microwave heating conditions. For example, susceptor structures formed from the base films may generally have a browning reaction rate that exceeds the browning reaction rate of a susceptor structure made from a conventional biaxially oriented PET film, for example, such that a discernible difference in browning and/or crisping of food items may be observed.

In one aspect, the susceptor film may comprise a minimally oriented film. Minimally oriented films may be unoriented (i.e., non-oriented) or slightly oriented (i.e., from greater than 0% to about 20% orientation, as will be discussed below). Unoriented polymer films are films that are not subjected to stretching in either or both the machine direction (MD) and cross directions (CD) at temperatures below the melting point of the polymer. Unoriented polymer films can be quenched rapidly, which results in a low crystallinity, for example, less than about 25%, which may generally be attributed to the melt orientation associated with drawing down the melt to the desired final film thickness. In contrast, highly oriented films of the type used in conventional susceptor films and structures have high levels of orientation and/or strain induced crystallinity and possess high levels of residual shrink forces.

In each of various examples, minimally oriented films according to the present disclosure may be characterized as having one or more of the following:

a refractive index ($n_z$) of less than about 1.59, for example, from about 1.57 to about 1.58, or from about 1.5727 to about 1.58, for example, about 1.575 (see, e.g., Polymer Handbook, J. Brandrup, E. H. Immergut, and E. A. Grulke, 4th ed., John Wiley & Sons, Inc., 1999, ISBN 0-471-16628-6), or from about 1.5723 to about 1.5727, for example, about 1.5725;

a birefringence ($n_z$-$n_x$) of less than about 0.005, less than about 0.004, less than about 0.0035, or less than about 0.0028, for example, from about 0.0012 to about 0.0022, for example, about 0.0016; and

a crystallinity of less than about 25%, less than about 20%, less than about 15%, less than about 10%, or less than about 7%. In one particular embodiment, the film may have a crystallinity of about 5%. However, other crystallinities, refractive indexes, birefringences, and ranges of each may be suitable.

Any suitable polymer may be used to form the susceptor base film or substrate. In one example, the film may comprise amorphous PET (APET), for example, APET film commercially available from Pure-Stat Technologies, Inc. (Lewiston, Maine). However, other suitable APET films and/or other polymer films may be used.

The present inventors have discovered that susceptor films including lower orientation levels may tend to resist crazing to a greater extent than conventional, highly oriented, highly crystalline biaxially oriented PET films. While not wishing to be bound by theory, it is believed that high residual shrink forces may have a significant role in the onset and propagation of crazing of susceptor structures. Since less oriented films exhibit much lower heat induced dimensional shrinkage forces than highly oriented films, minimally oriented films may tend to resist crazing more than highly oriented polymer films. Thus, a minimally oriented film with inherently low, very low, or even no shrinkage forces, for example, APET, may tend to resist crazing to a greater extent than a conventional, highly oriented film with inherently high shrink forces, for example, a highly oriented PET. This is believed to be a clear departure from the conventional approach to designing susceptor films as taught in the art.

Alternatively or additionally, and while not wishing to be bound by theory, it also is believed that the crystallinity of the minimally oriented polymer film may increase during the heating cycle, thereby rendering the polymer more resistant to heat, and therefore, more heat stable. As a result, the stability of the susceptor film may increase during the heating cycle.

In another aspect, the susceptor film may comprise a moderately oriented polymer film, that is, a polymer film that has been subject to an orientation process by which at least one dimension of the film is increased from 20% to about 200%, for example, from about 20% to about 150%, for example, from about 30% to about 70%, for example, about 50%. This corresponds to respective draw ratios of from about 1.2:1 to about 3:1, for example, from about 1.2:1 to about 2.5:1, for example, from about 1.3:1 to about 1.7:1, for example, about 1.5:1 (where the draw ratio equals the percent stretch divided by 100, plus 1). Such an orientation process may be useful where the unoriented film lacks sufficient strength for a particular application.

In each of various examples, moderately oriented films according to the present disclosure may be characterized as having one or more of the following:

a refractive index ($n_z$) of less than about 1.62, less than about 1.61, less than about 1.60, or less than about 1.59, for example, from about 1.57 to about 1.59, for example, from about 1.5733 to about 1.5848, for example, about 1.5791;

a birefringence ($n_z$-$n_x$) of less than about 0.05, less than about 0.035, less than about 0.01, or less than about 0.0024, for example, from about -0.013 to about 0.0024, for example, about -0.0029; and

a crystallinity of less than about 50%, less than about 40%, less than about 30%, less than about 20%, less than about 15%, less than about 12%, less than about 10%, or less than about 7%. In one specific example, the crystallinity of the film may be about 5%. However, other crystallinities, refractive indexes, birefringences, and ranges of each may be suitable.

The orientation may be biaxial or bidirectional (i.e., in both the machine direction (MD) and cross-machine direction (CD)), or may be uniaxial or unidirectional (i.e., in either the MD or CD). Surprisingly, the present inventors have determined that under certain process conditions, strength may be imparted to the film without driving the level of crystallinity to the levels observed in conventional biaxially oriented PET. Specifically, the conditions may be selected to minimize the strain induced crystallization and thermal induced crystallization commonly associated with typical orienting processes. Accordingly, the orientation process conditions may be customized to provide a desired level of crystallinity, and therefore, desired heating performance for a particular susceptor film application.

As will be understood by those familiar with orientation processes, all other things being equal, stretching closer to Tg (approximately 80°C for polyethylene terephthalate) requires more force to be exerted to effect a given stretch ratio and greater stress is imparted to the polymer; this is the typical route pursued for developing high crystallinity, high residual orientation and high mechanical strength properties for standard highly biaxially oriented PET polymer films. The resulting films often have a crystallinity of greater than 50%. However, the present inventors have found that it may be useful to depart from the conventional practice of seeking high levels of crystallinity and residual orientation. Instead, the films of the present disclosure may generally be stretched at temperatures well above Tg to minimize strain induced crystallization. By way of example, in laboratory testing, films that were stretched at temperatures of at least about 105°C and annealed at a temperature of at least about 170°C achieved a significant improvement in strength without sacrificing the heating performance of an unoriented film, as will be discussed further below in connection with the examples. It will be noted that these temperatures are exemplary only and were obtained on laboratory scale equipment (see the Examples), and such temperatures may or may not apply on commercial scale equipment for a given polymer system.

In another aspect, the present inventors have also discovered that if the polymer is chosen properly, higher levels of orientation may still result in relatively low crystallinity, and therefore, may produce susceptor films having a higher heating potential than conventional films. By way of example, it has been discovered that copolyesters having a melting point at or below that of standard PET homopolymer can produce susceptor films that have excellent heating characteristics. While not wishing to be bound by theory, it is believed that steric hindrance considerations of copolyesters of interest in this disclosure retard crystallinity development and even highly oriented films made from these materials are typically incapable of reaching absolute crystallinity levels that are commonly achieved with PET homopolymers. Even though these films may achieve close to their potential maximum orientation crystallinity during processing, the copolymer is not capable of reaching the absolute crystallinity level possible with homopolymers. Accordingly, films produced from copolyesters of the type disclosed herein, whether unoriented, slightly oriented, moderately oriented, or highly oriented have lower refractive indexes and birefringence values than typical in biaxially oriented standard and heat stabilized standard PET films.

More particularly, in each of various examples, highly oriented films according to the present disclosure may be characterized as having one or more of the following:

a refractive index ($n_z$) of less than about 1.64, for example, from 1.56 to about 1.63, for example, from about 1.58 to about 1.61, for example, from about 1.5769 to about 1.6124, for example, about 1.5920;
a birefringence ($n_z-n_x$) of less than about 0.15, less than about 0.14, less than about 0.125, or less than about 0.11, for example, from about 0.0030 to about 0.10, for example, from about 0.0029 to about 0.1022, for example, about 0.0437; and
a crystallinity of less than about 50%, less than about 40%, less than about 30%, less than about 26%, less than about 20%, or less than about 15%. In one particular example, the crystallinity may be about 7%. However, other crystallinities, refractive indexes, birefringences, and ranges of each may be suitable. These values reflect the avoidance of significant amounts of strain induced or thermally induced crystallinity in the films during the orientation process. Accordingly, highly oriented susceptor films and structures including base films comprising a copolyester have been shown to have excellent heating properties, comparable to the unoriented, slightly oriented, and/or moderately oriented base films described above.

These results are unexpected and in sharp contrast to the prior art, in which copolyesters with melt points higher than homopolymer PET were used in an attempt to create greater temperature resistance. Others have attempted to create higher heat capability susceptor base films by heat setting the biaxially oriented films at higher temperatures for longer times. These have generated mixed results. The present inventors have discovered that slight increases in the temperature of onset of the release of the significant shrink forces present in highly oriented homopolymer PET films do little to increase resistance to crazing and resultant deterioration in heating and limited heat generating capability. However, the present inventors have learned that by minimizing crystallinity and residual orientation, even in highly oriented films, it is possible to create mechanically strong, thin films that have superior heating performance to conventionally used susceptor films.

Any suitable copolyester may be used. The copolyester may generally have a melting point of less than about 260°C, for example, from about 200°C to about 260°C, for example, from about 220°C to about 260°C. In some examples, the copolyester may have a melting point of less than about 250°C, for example, from about 200°C to about 250°C, for example, from about 220°C to about 250°C. The melting point may be similar to or lower than the melting point of standard PET polymers, which have peak crystalline melt points when determined by second DSC heating in the range of 250°C to 260°C, although some references report PET homopolymer melt points as high as 265°C (see "Polymer Chemistry, An Introduction 3rd Edition" by Malcolm Stevens published 1999 by Oxford University Press, p. 344).

The copolyester also may generally be resistant to the development of the very high (>50%) levels of crystallinity commonly associated with standard biaxially oriented PET or heat stabilized PET films. In some examples, the base film may have a crystallinity of less than about 37%, despite having undergone high degrees of biaxial orientation (similar to stretching ratios common for biaxially oriented standard or heat stabilized PET polymer films). It is anticipated that similarly low or even lower crystallinity values would be observed for unoriented, slightly oriented, or moderately oriented films produced from copolyesters.

One specific example of a copolymer that may be suitable for use in a susceptor base film is SKYPET-BR (SK Chemicals of Seoul, Korea), which falls in the broad classification of substances described by CA Index Name 1,4-benzenedicarboxylic, dimethyl ester, polymer with 1,4-cyclohexanedimethanol and 1,2-ethanediol under CAS Registry Number 25640-14-6. SKYPET-BR has a melting point of 236+/- 2°C, well below the typical melting point of standard PET polymer. An alternative polymer with similar properties is Eastman PET 9921 produced by Eastman Chemical Company, Kingsport, TN. These materials are part of a broad class of copolyester materials based on 1,4-cyclohexanedimethanol (commonly abbreviated as CHDM), which may be formed through the modification of poly(ethylene terephthalate) with 1,4-cyclohexanedimethanol or the modification of poly(1,4-cyclohexylenedimethylene terephthalate) with ethylene glycol or isophthalic acid.

Other potentially suitable materials include polyethylene terephthalate copolyesters (diethylene glycol-isophthalate modified) prepared by the condensation of dimethyl terephthalate or terephthalic acid and ethylene glycol with one or more of the following: dimethyl isophthalate, isophthalic acid, and diethylene glycol. The resulting polymers may vary in terms of modification or co-polymerization levels, yielding different properties, which can be exploited in the context of modifying performance of substrate susceptor films produced from these polymers.

It will be appreciated that while several examples are provided herein, countless other possibilities and combinations thereof are contemplated, including copolyesters that are developed after the date of this disclosure.

In still another aspect, the present inventors have observed that higher orientation temperatures (all else being equal) may lead to higher heating capability. While not wishing to be bound by theory, it is believed that this is the result of higher polymer chain mobility at higher temperatures and resulting greater ease of the chains slipping past one another during orientation. This reduces the stress required to achieve a given degree of stretching, and can act to reduce strain induced crystallinity, the minimization of which is believed to be advantageous. Two rotational isomers of polyester exist, gauche and trans. Gauche isomers can be generally characterized as in a relaxed state, while trans isomers are in an extended, higher energy state. Significantly, the gauche isomer is only found in the amorphous domains or regions of the structure, while trans can exist in both crystalline and amorphous regions. Only trans exists in crystalline regions.

During strain induced crystallization, a portion of the gauche isomer content is understood to be converted to trans in the amorphous regions, further increasing total crystallinity as well as residual orientation. In some process situations, for example heat setting that does not induce further crystallization, it may also be possible to reverse some of the conversion, lowering crystallinity as a result in potential advantageous ways. While not wishing to be bound by theory, it is believed that minimizing (or even some modest reversing of) the gauche-trans conversion contributes to the performance of the susceptor films and structures of the present disclosure, and while gauche and trans content of the amorphous and crystalline domains of films of this disclosure have not been directly measured, they can be inferred from the ability of the material and process choices disclosed herein to minimize the overall crystallinity level of the resulting susceptor substrate films compared to the typically >50% crystallinity levels that characterize the standard and heat stabilized films that represent past practice. Higher gauche isomer content in films of this disclosure is also consistent with the lower refractive indexes and birefringence values reported herein.

In yet another aspect, depending on the film, it may also be advantageous, beyond what can be achieved with homopolymer films, to gain some additional heating capability by annealing at higher temperatures, as discussed in connection with the Examples.

It will be appreciated that the copolyesters described above may likewise be used to produce unoriented films, slightly oriented films, and moderately oriented films. In any of such cases, and for highly oriented films, the copolyester can be used either in films of homogenous structure made solely of the copolymers or in coextrusions combining discrete layers of copolymer and homopolymer. Blends of co- and homopolymer polyester may also be used advantageously compared to 100% homopolymer structures. Incorporation of copolyester, even with homopolymer present, serves to result in films with properties as susceptor base films superior to 100% homopolymer comprised base films. It will be noted that where the copolyester is used in a moderately oriented film, alone or in combination with one or more other polymers, a greater degree of orientation may be used without driving the level of crystallinity above 50%, as compared with susceptor base films comprising only PET homopolymer. In each of various examples, films including copolyester and PET homopolymer may be characterized as having one or more of the following:

a refractive index ($n_z$) of less than about 1.64, for example, from about 1.60 to about 1.63 or from about 1.5975 to about 1.6280, for example, about 1.6123;

a birefringence ($n_z - n_x$) of less than about 0.15, less than about 0.14, less than about 0.125, or less than about 0.11, for example, from about 0.065 to about 0.14, for example, from about 0.0654 to about 0.1355, for example, about 0.1031; and

a crystallinity of less than about 50%, less than about 40%, less than about 30%, less than about 20%, or less than about 10%. However, other crystallinities, refractive indexes, birefringences, and ranges of each may be suitable. It is also contemplated that other polymers may be used alone or any combination to form various susceptor base films having the properties described herein in connection with the present base films.

For any of the susceptor base films described herein or contemplated hereby, the kinetics of crystallization of the polymer film may be manipulated to achieve the desired level of crystallinity at various points in the heating cycle, with time, temperature, and the use of nucleating agents being variables that may be adjusted as needed to attain the desired susceptor film performance. Further, since different food products require different heating cycles for optimum preparation, it is anticipated that the additional degrees of freedom associated with controlling initial crystallinity levels and the kinetics of further crystallinity increases during heating will permit expanded customization capabilities, which may further enhance the utility and uniqueness of the susceptor films described herein.

It is also contemplated that in some instances, the susceptor film may be intended to be used more than once. In such instances, the crystallinity of the polymer film may be higher upon the second use and any subsequent use.

The polymer film may be formed in any suitable manner. In one example, the polymer film substrate may be a water quenched film, a cast film, or any other type of polymer film that is formed using a rapid quenching process. However, numerous other processes and systems may be used. When such films do not undergo a conventional post-extrusion orientation process, it will be appreciated that, in some instances, the film may be difficult to handle and/or convert into a susceptor structure. Thus, it is contemplated that the film may be subject to a minimal orienting process to orient (i.e., stretch) the film slightly (e.g., up to 20%, for example, from about 5% to 20%) to improve processability of the film. Since such orienting is relatively minor as compared with standard highly oriented films that are stretched about 350-450% in each direction, such slightly oriented films may be considered herein to be substantially unoriented.

If desired, the crystallinity of minimally oriented films can be controllably increased through post-extrusion heat treatment or conditioning. Crystallization kinetic modifying additives may also be used, as described above.

Additionally or alternatively, additives may be incorporated into the film to modify its properties to facilitate processing or to provide more robust microwave heating performance. As an example, a strength enhancing additive (e.g., a polymer) may be used to make more robust an otherwise somewhat fragile low gauge cast APET film. Examples of additives that may be suitable include an ethylene methyl acrylate copolymer, an ethylene-octene copolymer, or any other suitable polymer or material that improves the strength and/or processability of the polymer film. Other additives providing different functions or benefits may also be used. Any of such additives may be added in any suitable amount, for example, up to about 15% by weight of the polymer film, up to about 10% by weight of the polymer film, up to about 5% by weight of the polymer film, or in any other suitable amount. In other examples, the additives may be used in an amount of from about 1% to about 10%, from about 2% to about 8%, from 3% to about 5% by weight of the polymer film, or in any suitable amount or range of amounts.

Any of the susceptor base films may comprise a multilayer film including at least two distinct layers, each of which may comprise one or more polymers and, optionally, one or more additives. The layers may be coextruded or may be formed separately and joined to one another using an adhesive, a tie layer, thermal bonding, or using any other suitable technique. Other suitable techniques may include extrusion coating and coextrusion coating.

If desired, each layer of the multilayer film may be a rapidly quenched film, i.e., a film formed under conditions that provide very fast freezing of the polymer melt after it has exited the opening of the extrusion die. This rapid freezing and further lowering of the temperature of the solidified polymer film minimizes the development of crystalline micro or macro structures. As stated above, it is believed that when films with low crystallinity are used to form a susceptor film, the susceptor film is capable of achieving higher temperatures and heat flux during microwave heating, as compared with conventional susceptors made from biaxially oriented polyethylene terephthalate.

If desired, additional functional characteristics can be imparted to the multilayer film by selecting polymers having the desired attributes. For example, ethylene vinyl alcohol (EVOH) may be used to impart oxygen barrier properties. Polypropylene (PP) may be used to impart water vapor barrier properties. Such properties may render the film useful for controlled or modified atmosphere packaging, and in particular, for chilled or shelf stable foods, where higher oxygen and moisture barriers are typically required than for frozen foods. Numerous other possibilities are contemplated.

Numerous multilayer films are contemplated by the disclosure. By way of illustration and not limitation, some exemplary structures include: (a) APET/olefin; (b) APET/tie layer/olefin; (c) APET/tie layer/olefin/tie layer/APET; (d) APET/tie layer/PP/tie layer/APET; (e) APET/tie layer/PP/tie layer/amorphous nylon 6 or nylon 6,6; (f) APET/tie layer/APET; (g) APET/tie layer/EVOH/tie layer/APET; (h) APET/tie layer; (i) APET/tie layer/regrind of all layers/tie layer/EVOH/tie layer/APET; (j) APET/tie layer/EVOH/tie layer/amorphous nylon 6 or nylon 6,6; (k) APET/tie layer/olefin/tie layer/EVOH/tie layer/APET; (1) APET/tie layer/olefin/tie layer/EVOH/tie layer/nylon 6,6; (m) PET homopolymer/ copolyester/PET homopolymer; and (n) copolyester/PET homopolymer/copolyester.

In examples *a-c* and *k-l* and in any other multilayer film contemplated by this disclosure, the olefin layer may comprise any suitable polyolefin, for example, low density polyethylene (LDPE), linear low density polyethylene (LLDPE), medium density polyethylene (MDPE), high density polyethylene (HDPE), polypropylene (PP), copolymers of any of such polymers, and/or metallocene catalyzed versions of these polymers or copolymers.

In example i and in any other multilayer film contemplated by the disclosure, the regrind layer may include the film edge scrap and any other recyclable material, according to conventional practice. Any of the various other examples (examples *a-h* or *j-l*) or other films contemplated by this disclosure may contain such a regrind layer. In some cases, regrind layers may require a tie layer to bond them satisfactorily to the adjacent film layers.

In examples *b-j*, and in any other multilayer film contemplated by this disclosure, the tie layer may comprise any suitable material that provides the desired level of adhesion between the adjacent layers. In some exemplary embodiments, the tie layer may comprise Bynel® from DuPont, Plexar® from Equistar, a LyondellBasell company, or Exxlor™ from Exxon. The precise selection of the tie layer depends on the adjacent polymers it is intended to join and rheological properties that ensure even distribution of layers in the coextrusion process. For example, DuPont Bynel 21E781 is part of the Bynel 2100 Series of anhydride modified ethylene acrylate resins that are most often used to adhere to PET, nylon, EVOH, polyethylene (PE), PP, and ethylene copolymers. Plexar® PX1007 is one of a class of ethylene vinyl acetate copolymers that can be used to bond a similar range of materials as the Bynel resin mentioned previously. Exxlor® grades may be used to enhance the impact performance of various nylon polymers. In addition, the tie layers and other resins may be selected for their prior sanctioned use in high temperature films for applications such as retort pouches, where minimal resin extractables into food are allowed.

It is contemplated that either amorphous nylon 6 or nylon 6,6 could be substituted for APET in any of the above multilayer film structures or any other structure within the scope of the disclosure. Countless other structures are contemplated.

The basis weight and/or caliper of the polymer film, whether single layer or multilayer, may vary for each application. In some embodiments, the film may be from about 12 to about 50 microns thick, for example, from about 12 to about 35 microns thick, for example, about 12 to 20 microns thick. However, other calipers are contemplated.

A layer of microwave energy interactive material (i.e., a susceptor or microwave susceptible coating) may be deposited on one or both sides of the polymer film to form a susceptor film. The microwave energy interactive material may comprise an electroconductive or semiconductive material, for example, a vacuum deposited metal or metal alloy, or a metallic ink, an organic ink, an inorganic ink, a metallic paste, an organic paste, an inorganic paste, or any combination thereof. Examples of metals and metal alloys that may be suitable include, but are not limited to, aluminum, chromium, copper, inconel alloys (nickel-chromium-molybdenum alloy with niobium), iron, magnesium, nickel, stainless steel, tin, titanium, tungsten, and any combination or alloy thereof.

Alternatively, the microwave energy interactive material may comprise a metal oxide, for example, oxides of aluminum, iron, and tin, optionally used in conjunction with an electrically conductive material. Another metal oxide that may be suitable is indium tin oxide (ITO). ITO has a more uniform crystal structure and, therefore, is clear at most coating thicknesses.

Alternatively still, the microwave energy interactive material may comprise a suitable electroconductive, semiconductive, or non-conductive artificial dielectric or ferroelectric. Artificial dielectrics comprise conductive, subdivided material in a polymeric or other suitable matrix or binder, and may include flakes of an electroconductive metal, for example, aluminum.

In other embodiments, the microwave energy interactive material may be carbon-based, for example, as disclosed in U.S. Patent Nos. 4,943,456, 5,002,826, 5,118,747, and 5,410,135.

In still other embodiments, the microwave energy interactive material may interact with the magnetic portion of the electromagnetic energy in the microwave oven. Correctly chosen materials of this type can self-limit based on the loss of interaction when the Curie temperature of the material is reached. An example of such an interactive coating is described in U.S. Patent No. 4,283,427.

The susceptor film may then be laminated or otherwise joined to another material to produce a susceptor structure or package. In one example, the susceptor film may be laminated or otherwise joined to paper or paperboard to make a susceptor structure having a higher thermal flux output than conventional paper or paperboard based susceptor structures. The paper may have a basis weight of from about 24,41 to about 97,65 $g/m^2$ (about 15 to about 60 lb/ream or lb/3000 sq.ft.),

for example, from about 32,55 to about 65,1 $g/m^2$ (about 20 to about 40 lb/ream), for example, about 40,69 $g/m^2$ (25 lb/ream).

The paperboard may have a basis weight of from about 97,65 to about 537,08 $g/m^2$ (about 60 to about 330 lb/ream), for example, from about 130,2 to about 227,85 $g/m^2$ (about 80 to about 140 lb/ream).

The paperboard generally may have a thickness of from about 0,1524 to about 0,762mm (about 6 to about 30 mils), for example, from about 0,3048 to about 0,7112 mm (about 12 to about 28 mils).

In one particular example, the paperboard has a thickness of about 0,3556mm (14mils or 0,014 inches).

Any suitable paperboard may be used, for example, a solid bleached sulfate board, for example, Fortress® board, commercially available from International Paper Company, Memphis, TN, or solid unbleached sulfate board, such as SUS® board, commercially available from Graphic Packaging International.

Alternatively, the susceptor film may be laminated or otherwise joined to another polymer film. It is contemplated that the polymer film would exhibit little or no shrink, similar to its base film counterpart, such that the performance attributes of the susceptor film are not adversely affected. It is also contemplated that such polymer films may be clear, translucent, or opaque, as needed for a particular application. It is further contemplated that the laminated (or otherwise joined) structures may be capable of being thermoformable. It is anticipated that shallow draw shapes could preserve susceptor functionality in all but the highest stretch areas during thermoforming, and one could advantageously use die and or plug design to tailor local stretch ratios to customize degree of susceptor functionality. The inherently lower crystallinity of the films of this disclosure lend themselves advantageously to formability, as high crystalline materials do not form easily, particularly on in-line form-fill-seal packaging machinery. Post crystallization of formed structures may be induced through methods common to those skilled in the art.

If desired, the susceptor base film may undergo one or more treatments to modify the surface prior to depositing the microwave energy interactive material onto the polymer film. By way of example, and not limitation, the polymer film may undergo a plasma treatment to modify the roughness of the surface of the polymer film. While not wishing to be bound by theory, it is believed that such surface treatments may provide a more uniform surface for receiving the microwave energy interactive material, which in turn, may increase the heat flux and maximum temperature of the resulting susceptor structure. Such treatments are discussed in U.S. Patent Application No. 12/709,578, filed February 22, 2010.

Also, if desired, the susceptor film may be used in conjunction with other microwave energy interactive elements and/or structures. Structures including multiple susceptor layers are also contemplated. It will be appreciated that the use of the present susceptor film and/or structure with such elements and/or structures may provide enhanced results as compared with a conventional susceptor.

By way of example, the susceptor film may be used with a foil or high optical density evaporated material having a thickness sufficient to reflect a substantial portion of impinging microwave energy. Such elements typically are formed from a conductive, reflective metal or metal alloy, for example, aluminum, copper, or stainless steel, in the form of a solid patch generally having a thickness of from about 0,07239mm (0,00285 inches) to about 0,127mm (0,005 inches), for example, from about 0,00762mm (0,0003 inches) to about 0,0762mm (0,003 inches).

Other such elements may have a thickness of from about 0,00889mm (0,00035 inches) to about 0,0508mm (0,002 inches), for example, 0,0406mm (0,0016 inches).

In some cases, microwave energy reflecting (or reflective) elements may be used as shielding elements where the food item is prone to scorching or drying out during heating. In other cases, smaller microwave energy reflecting elements may be used to diffuse or lessen the intensity of microwave energy. One example of a material utilizing such microwave energy reflecting elements is commercially available from Graphic Packaging International, Inc. (Marietta, GA) under the trade name MicroRite® packaging material. In other examples, a plurality of microwave energy reflecting elements may be arranged to form a microwave energy distributing element to direct microwave energy to specific areas of the food item. If desired, the loops may be of a length that causes microwave energy to resonate, thereby enhancing the distribution effect. Examples of microwave energy distributing elements are described in U.S. Patent Nos. 6,204,492, 6,433,322, 6,552,315, and 6,677,563.

In still another example, the susceptor film and/or structure may be used with or may be used to form a microwave energy interactive insulating material. Examples of such materials are provided in U.S. Patent No. 7,019,271, U.S. Patent No. 7,351,942, and U.S. Patent Application Publication No. 2008/0078759 A1, published April 3, 2008.

If desired, any of the numerous microwave energy interactive elements described herein or contemplated hereby may be substantially continuous, that is, without substantial breaks or interruptions, or may be discontinuous, for example, by including one or more breaks or apertures that transmit microwave energy. The breaks or apertures may extend through the entire structure, or only through one or more layers. The number, shape, size, and positioning of such breaks or apertures may vary for a particular application depending on the type of construct being formed, the food item to be heated therein or thereon, the desired degree of heating, browning, and/or crisping, whether direct exposure to microwave energy is needed or desired to attain uniform heating of the food item, the need for regulating the change in temperature of the food item through direct heating, and whether and to what extent there is a need for venting.

By way of illustration, a microwave energy interactive element may include one or more transparent areas to effect dielectric heating of the food item. However, where the microwave energy interactive element comprises a susceptor, such apertures decrease the total microwave energy interactive area, and therefore, decrease the amount of microwave energy interactive material available for heating, browning, and/or crisping the surface of the food item. Thus, the relative amounts of microwave energy interactive areas and microwave energy transparent areas must be balanced to attain the desired overall heating characteristics for the particular food item.

As another example, one or more portions of a susceptor may be designed to be microwave energy inactive to ensure that the microwave energy is focused efficiently on the areas to be heated, browned, and/or crisped, rather than being lost to portions of the food item not intended to be browned and/or crisped or to heating the environment. Additionally or alternatively, it may be beneficial to create one or more discontinuities or inactive regions to prevent overheating or charring of the food item and/or the construct including the susceptor.

As still another example, a susceptor may incorporate one or more "fuse" elements that limit the propagation of cracks in the susceptor, and thereby control overheating, in areas of the susceptor where heat transfer to the food is low and the susceptor might tend to become too hot. The size and shape of the fuses may be varied as needed. Examples of susceptors including such fuses are provided, for example, in U.S. Patent No. 5,412,187, U.S. Patent No. 5,530,231, U.S. Patent Application Publication No. 2008/0035634A1, published February 14, 2008, and PCT Application Publication No. WO 2007/127371, published November 8, 2007.

It will be noted that any of such discontinuities or apertures in a susceptor may comprise a physical aperture or void in one or more layers or materials used to form the structure or construct, or may be a non-physical "aperture". A non-physical aperture is a microwave energy transparent area that allows microwave energy to pass through the structure without an actual void or hole cut through the structure. Such areas may be formed by simply not applying microwave energy interactive material to the particular area, by removing microwave energy interactive material from the particular area, or by mechanically deactivating the particular area (rendering the area electrically discontinuous). Alternatively, the areas may be formed by chemically deactivating the microwave energy interactive material in the particular area, thereby transforming the microwave energy interactive material in the area into a substance that is transparent to microwave energy (i.e., microwave energy inactive). While both physical and non-physical apertures allow the food item to be heated directly by the microwave energy, a physical aperture also provides a venting function to allow steam or other vapors or liquid released from the food item to be carried away from the food item.

The present invention may be understood further in view of the following examples, which are not intended to be limiting in any manner. All of the information provided represents approximate values, unless otherwise specified.

EXAMPLE 1

A calorimetry test was conducted to determine the thermal flux produced by and maximum temperature reached by various susceptor structures. Various polymer films were used to form the susceptor structures, as set forth in Table 1. The polymer films included DuPont Mylar® 800C biaxially oriented PET (DuPont Teijin Films™, Hopewell, VA), Pure-Stat APET (Pure-Stat Technologies, Inc., Lewiston, Maine), DuPont HS2 biaxially oriented PET (DuPont Teijin Films™, Hopewell, VA), and Toray Lumirror® F65 biaxially oriented PET (Toray Films Europe). Each susceptor structure was made by joining a susceptor film to a paperboard support layer using from about 1.5 to about 2.0 lb/ream of one of the following adhesives: Royal 20469 (Royal Adhesives & Sealants, South Bend, IN), Royal 20123 (Royal Adhesives & Sealants, South Bend, IN), or Henkel 5T-5380M5 (Henkel Adhesives, Elgin, IL). However, other suitable adhesives may be used.

Refractive index measurements were taken using a Metricon 2010 Prism Coupler (Metricon Corporation, Pennington, NJ) at 633 nm. Results for the films are listed as ($n_z$) (machine direction, MD), ($n_y$) (cross or transverse direction, CD), and ($n_x$) (thickness) directions. The birefringence ($n_z$-$n_x$) was calculated from the refractive indexes and, throughout this specification, represents the difference in refractive indexes in the MD and thickness of the films. All these films were without added colorants or pigmentation, and thus were clear.

Samples 1-1 and 1-6, made using commercial standard and heat stabilized PET homopolymer films, respectively, exhibited high refractive indexes in both MD and CD ($n_z$ and $n_y$, respectively) that are characteristic of the highly oriented, highly crystalline films of the prior art. The superior performing cast film based structures samples 1-3 and 1-4 exhibit much lower ($n_z$) and ($n_y$) values that in fact are quite close to reported values for amorphous homopolymer PET polymer. Combining this data with crystallinity >50% for samples 1-1 and 1-6 and only about 5% for samples 1-3 and 1-4 confirms that these samples represent largely amorphous films with little if any residual orientation. The differences between ($n_z$) and ($n_y$) values in samples 1-1 and 1-6 represent small differences in MD and CD orientation or heat setting, but these are within the range of what one could expect to encounter with films possessing reasonably balanced MD/CD orientation.

The calorimetry data was collected using a FISO MWS Microwave Work Station fiber optic temperature sensing device (FISO, Quebec, Canada) with eight (8) channels mounted onto a Panasonic 1300 watt consumer microwave oven model NN-S760WA. A sample having a diameter of about 5 in. was positioned between two circular Pyrex® plates, each having a thickness of about 0.25 in. and a diameter of about 5 in. An about 250 g water load in a plastic bowl resting on an about 1 in. thick expanded polystyrene insulating sheet was placed above the plates (so that radiant heat from the water did not affect the plates). The bottom plate was raised about 1 in. above the glass turntable using three substantially triangular ceramic stands. Thermo-optic probes were affixed to the top surface of the top plate to measure the surface temperature of the plate. After heating the sample at full power for about 5 minutes in an about 1300W microwave oven, the average maximum temperature rise from initial ambient temperature in degrees C of the top plate surface was recorded. (Finite element analysis modeling of the calorimetry test method has shown that the average maximum temperature rise is proportional to the thermal flux generated by the susceptor structure.) The conductivity $\sigma$ (mmho/sq) of each sample was measured using a Delcom 717 conductance monitor (Delcom Instruments, Inc., Prescott, WI) prior to conducting the calorimetry test, with five data points being collected and averaged. The results are presented in **Table 1**, where $\Delta T$ is the rise in temperature for the sample, and where $\Delta\Delta T$ is the difference between the rise in temperature for the sample and the rise in temperature for the control sample (structure 1-1, standard biaxially oriented, heat set PET film). It will be noted that the absolute temperature reached for each sample was about 22°C higher than the reported $\Delta T$ since all samples had an initial temperature of about 22°C (ambient temperature).

In general, susceptor structures 1-3 and 1-4 provided the most heating power and the least amount of crazing, while structure 1-1 exhibited a lower heating power than structures 1-3 and 1-4 and the greatest amount of crazing. Structure 1-6 had less crazing than structure 1-1 and provided a moderate heating power.

Notably, structure 1-5, which had already been heated once, exhibited a greater power output than structure 1-1. Although no visible crazing was observed, the sample still exhibited some degree of self-limiting behavior (as evidenced by $\Delta T$max). While not wishing to be bound by theory, it is believed that this self-limiting behavior is at least partially the result of a change in density of the polymer film during the microwave heating cycle. Specifically, it is known that the density of a polymer film may decrease as the polymer film heats. However, as the polymer film heats, there is also an increase in crystallinity and an accompanying increase in density. It is believed that the magnitude of this increase in density exceeds the magnitude of the initial density decrease, such that there is an overall increase in density during the heating cycle. It is further believed that this increase in density may cause disruptions or microcrazing in the susceptor structure that create electrical discontinuities on an atomic scale.

**Table 1**

| Sample/ structure | Polymer film (0.5 mil) | Board (pt) | % Crystallinity (initial) | Degree of post-extrusion orientation | $n_z$ (MD) $n_y$ (CD) | $n_z$-$n_x$ | Degree of heat setting | $\Delta T$ max (°C) | $\Delta\Delta T$ (°C) | σ, before (mmho/sq.) | σ, after (mmho/sq.) | Visible crazing |
|---|---|---|---|---|---|---|---|---|---|---|---|---|
| 1-1 | DuPont Mylar 800C PET | 18 | 53 | High | 1.6644 1.6488 | 0.1707 | Medium | 142.9 ±4.5 | 0 | 20 | 0 | Yes |
| 1-2 | DuPont Mylar 800C PET, second heating | 18 | - | High | - | - | Medium | 111.0 ±18 | -31.9 | 0 | 0 | Yes |
| 1-3 | Pure-Stat APET, metallized on first side | 12 | 5 | None | 1.5734 1.5735 | 0.0014 | None | 164.7 | 21.8 | 13 ±1 | 1±0 | No |
| 1-4 | Pure-Stat APET, metallized on second side | 12 | 5 | None | 1.5733 1.5737 | 0.0012 | None | 166.8 | 23.9 | 14 ±1 | 1±0 | No |
| 1-5 | Pure-Stat APET, second heating on first side | 12 | 5 | None | - | - | None | 149.0 | 6.1 | 1 | 0 | No |
| 1-6 | DuPont HS2 | 14 | 55 | High | 1.6587 1.6568 | 0.1662 | High | 152.0 | 9.2 | 5 | 0 | Yes |
| 1-7 | Toray F65 | 12 | 55 | High | - | | High | 149.6 ±3.8 | 6.7 | 8 | 0 | Yes |

EP 2 459 624 B1

EXAMPLE 2

The microwave reflection, absorption, and transmission (RAT) properties of a conventional susceptor structure (structure 1-1) were compared with an experimental susceptor structure (structure 1-3) using the calorimetry test described in Example 1 with various heating times. Further, a new parameter, craze perimeter divided by field area (P/A, mm/mm$^2$), was determined for some heating times of structure 1-1 using image analysis to examine the respective samples after heating. A merit factor was also calculated at each heating time, where:

$$\text{Merit Factor} = \text{Absorbance (A)}/(1 - \text{Reflectance (R)}).$$

The results are presented in Tables 2 and 3. Since little or no crazing was observed for structure 1-3, no P/A data is presented in **Table 3**.

Notably, at longer heating times, structure 1-3 provided greater heating than structure 1-1. Susceptor structures with larger merit factors generally exhibit greater food surface browning and crisping because they limit the amount of direct microwave heating of the food while maximizing the susceptor absorbance. Therefore, as a practical matter, a structure using a low crystallinity polymer film may be able to advantageously provide a greater level of surface browning and/or crisping while minimizing dielectric heating of the food item.

**Table 2: Structure 1-1**

| Time of Heating (sec) | R | A | T | Merit Factor A/(1-R) | Delta T Max (°C) | P/A (mm/mm$^2$) |
|---|---|---|---|---|---|---|
| 1 | 0.43 | 0.47 | 0.10 | 0.82 | - | - |
| 2 | 0.42 | 0.47 | 0.11 | 0.81 | 0 | - |
| 5 | 0.43 | 0.46 | 0.10 | 0.81 | - | - |
| 10 | 0.41 | 0.48 | 0.12 | 0.81 | 5 | - |
| 20 | 0.33 | 0.46 | 0.21 | 0.69 | 16 | - |
| 40 | 0.28 | 0.44 | 0.28 | 0.61 | 32 | 1.32 |
| 60 | 0.26 | 0.37 | 0.37 | 0.50 | 51 | 1.00 |
| 80 | n/a | n/a | n/a | n/a | 64 | - |
| 100 | 0.27 | 0.38 | 0.35 | 0.52 | 67 | - |
| 140 | 0.20 | 0.23 | 0.57 | 0.29 | 91 | 1.03 |
| 160 | 0.24 | 0.28 | 0.48 | 0.37 | 93 | - |
| 180 | 0.18 | 0.19 | 0.63 | 0.23 | 111 | - |
| 180 | 0.18 | 0.18 | 0.64 | 0.22 | 110 | 1.97 |
| 200 | 0.18 | 0.20 | 0.62 | 0.24 | 120 | - |
| 220 | 0.22 | 0.21 | 0.57 | 0.27 | 118 | - |
| 240 | 0.20 | 0.24 | 0.56 | 0.30 | 114 | - |
| 260 | 0.17 | 0.16 | 0.67 | 0.19 | 127 | 1.64 |
| 280 | 0.16 | 0.15 | 0.69 | 0.18 | 133 | - |
| 300 | n/a | n/a | n/a | n/a | 141 | 2.77 |

**Table 3: Structure 1-3**

| Time of Heating (sec) | R | A | T | Merit Factor A/(1-R) | Delta T Max (°C) |
|---|---|---|---|---|---|
| 0 | 0.42 | 0.47 | 0.11 | 0.81 | 0 |
| 5 | 0.43 | 0.46 | 0.11 | 0.81 | 1.0 |
| 10 | 0.41 | 0.46 | 0.13 | 0.78 | 5.2 |
| 20 | 0.42 | 0.46 | 0.11 | 0.79 | 17.6 |
| 40 | 0.40 | 0.43 | 0.17 | 0.72 | 34.4 |
| 80 | 0.40 | 0.47 | 0.13 | 0.78 | 64.9 |
| 160 | 0.30 | 0.49 | 0.20 | 0.70 | 120.7 |
| 320 | 0.12 | 0.48 | 0.40 | 0.55 | 178.8 |

EXAMPLE 3

Image analysis was used to determine the extent of browning of a food item using various susceptor structures. In each example, a Stouffer's microwavable flatbread melt was heated on the susceptor structure for about 2.5 minutes in a 1000W microwave oven. When the heating cycle was complete, the food item was inverted and the side of the food item heated adjacent to the susceptor was photographed. Adobe Photoshop was used to evaluate the images. To do so, various RGB (red/green/blue) set points were selected to correspond to various shades of brown, with higher set points corresponding to lighter shades. At each RGB set point, the number of pixels having that shade was counted. A tolerance of 20 was used. The results are presented in **Table 4**. Although both structures provided some degree of browning and/or crisping, structure 1-3 provided the greatest degree of browning and crisping without burning the food item or susceptor structure. Replicate testing of structure 1-3 confirmed the superior browning performance of the structure.

**Table 4**

| Test | Structure | No. of pixels RGB = 33 | No. of pixels RGB = 85 | No. of pixels RGB = 109 |
|---|---|---|---|---|
| 4-1 | Structure 1-1 (0.5 mil DuPont 800C susceptor film joined to 18 pt paperboard) | 984 | 3619 | 6330 |
| 4-2 | Structure 1-3 (replicate 1) (0.5 mil Pure-Stat APET susceptor film joined to 12 pt paperboard) | 8591 | 10976 RGB = 82 | 1764 |
| 4-3 | Structure 1-3 (replicate 2) (0.5 mil Pure-Stat APET susceptor film joined to 12 pt paperboard) | 9023 | 7099 RGB = 82 | 1907 |

EXAMPLE 4

Various films and susceptor structures were prepared for evaluation. Two film producers were used to prepare APET films: SML Maschinengesellschaft mbH (Lenzing, Austria) ("SML") (sample 5-3) and Pure-Stat Technologies, Inc. (Lewiston, ME) ("Pure-Stat") (samples 5-4 through 5-15). Additionally, Dartek® N201 nylon 6,6 (Liqui-box Canada, Whitby, Ontario, Canada) was evaluated (sample 5-2). Mylar® 800 biaxially oriented PET ("BOPET") (DuPont Teijan™ Films, Hopewell, VA) (sample 5-1) was evaluated as a control material. The films were then metallized with aluminum and joined to 14 pt (0.014 inches thick) Fortress® board (International Paper Company, Memphis, TN) using a substantially continuous layer of from about 1 to about 2 lb/ream (as needed) Royal Hydra Fast-en® 20123 adhesive (Royal Adhesives, South Bend, IN) to form various susceptor structures.

Various strength enhancing additives were also evaluated, including Optema™ TC 120 and Optema™ TC 220 ExCo (ethylene methyl acrylate copolymer resins, ExxonMobil Chemical), Sukano im F535 (ethylene methyl acrylate copolymer resin, Sukano Polymers Corporation, Duncan, SC), Engage™ 8401 (ethylene-octene copolymer, Dow Plastics), and Americhem 60461-CD1 (composition unknown) (Americhem Cuyahoga Falls, OH).

The process for forming the APET film used by Pure-Stat Technologies, Inc. was as follows. Traytuf® 9506 PET resin pellets (M&G Polymers USA, LLC, Houston, TX) were desiccant dried and conveyed to a cast film line extruder hopper. The additive pellets were metered into the extruder throat, combined with the dry PET pellets, melted, mixed, and extruded through a slot die to form a flat molten film. The molten film was cast onto a cooling drum, rapidly quenched into a largely amorphous solid state, and conveyed over rollers to a windup where the film was wound into a roll for further processing. The film was about 0,0203mm (0,0008 inches) or about 80 gauge in thickness. It will be noted that thicker or thinner films can be produced by varying the extruder output and cooling drum surface speed. The process used by SML Maschinengesellschaft mbH was similar.

DSC data was obtained for each film sample by heating the sample in a Perkin-Elmer differential scanning calorimeter (DSC-7) (Perkin-Elmer, Inc., Waltham, MA) at 10°C/minute, with a nitrogen purge to prevent degradation. Values were measured for samples heated to 300°C and cooled to 40°C. The results are presented in **Table 5**. It is important to note that the DSC data was taken from an initial heating of the test specimens. Therefore, the values reflect the impact of any post-extrusion orientation and the specific thermal heat history each specimen experienced due to processing on the crystallinity of the specimen. The negative enthalpy change associated with crystallization is proportional to the amount of non-crystalline polymer present in the specimen. The positive enthalpy change associated with melting is a measure of the degree of crystallinity attained by the specimen during the DSC measurement. The more equal the absolute values of these enthalpy values the more amorphous the specimen. Therefore, the values confirm that the highly oriented film, sample 5-1, possessed very high levels of orientation and crystallinity and the cast APET films 5-3 through 5-15, films possessed low levels of crystallinity. The somewhat larger differences in enthalpy noted for samples 5-6 through 5-15 reflect the impact of the non-PET strengthening additives present, but still are indicative of low levels of crystallinity in these films.

The apparent roughness of the surface (PEL) of each film was evaluated before and after treatment. Images of the surface of the film were acquired using atomic force microscopy (AFM) at 0 to 100 nm full scale. A gray level histogram was generated using a gray scale from 0 to 256 units full scale light to dark using an image analysis system developed by Integrated Paper Services (IPS), Appleton, WI. A binary image was produced at a gray scale of 120, which is equivalent to a plane intersecting the Z direction of the AFM image at 120/256*100 nm = 46.9 nm or 469 angstroms in height. The perimeter of the detected region was measured and normalized by the linear size of the image to form a dimensionless ratio, perimeter divided by edge length, or PEL, with greater PEL values indicating a rougher surface. In general, the PEL data indicate that lower PEL levels (smoother film surface) are associated higher calorimetry and browning results.

Peak load before break was measured according to TAPPI T-494 om-01. The values indicate that the strengthening additives in samples 5-6 through 5-15 were successful in increasing the robustness of the films. This was borne out in trials on commercial production equipment, where strengthening additive modified films processed without difficulties, while unmodified films of the type represented by samples 5-3 through 5-5 were more fragile in converting operations, and required adjustments to normal process parameters such as tension, and were converted less efficiently.

The haze of each polymer film was measured according to ASTM D1003 using a BYK Gardner Haze-Gard plus 4725 haze meter (BYK-Gardner, USA, Columbia, MD). In all cases, the incorporation of strengthening additives increased the haze of the films. In some instances, the most preferable additives may be those which exhibit lower levels of haze while providing the desired increase in strength for processing, and result in beneficially increased heating performance when made into susceptor films and structures.

Each susceptor structure was then evaluated using the calorimetry test described in Example 1. The results are presented in **Table 5**, where ΔT is the rise in temperature for the sample, and where ΔΔT is the difference between the rise in temperature for the sample and the rise in temperature for the control sample (structure 5-1, standard biaxially oriented, heat set PET film).

Additionally, each structure was evaluated using the pizza browning test described in Example 1, except that only an RGB (red/green/blue) setpoint of 104 was used (RGB = 104 generally corresponds to a shade of brown generally associated with a browned, crisped food item). A tolerance of 100 was used. Additionally, a Kraft DiGiorno microwavable pizza was used. The number of pixels having that shade was recorded, such that a greater number of pixels indicated that more browning was present.

It will be noted that prior to evaluating structure 5-1 (control), the unheated pizza crust was examined to determine a baseline pixel count of 24313 pixels having the color associated with the RGB value 104. This baseline value was used to calculate the results presented in **Table 1**, where:

ΔUB is the number of pixels for a given sample minus the baseline value for an unbrowned crust (24313); and
Δ% Imp is the percent improvement over the results obtained by the control sample (structure 5-1).

The calorimetry results and pizza browning results both show significant increases over control for all the unoriented, low crystallinity films, whether they incorporated additives or not. Visual observations of the cooked pizza crusts confirmed much more desirable levels of browning than were achieved with the standard control sample made from highly biaxially oriented, high crystallinity film. Thus, strengthening additives can improve film robustness with no detriment to performance when incorporated into microwave susceptor films and structures.

The relative reaction browning rate (RBRR) was then calculated using a simplified Arrhenius equation relationship for browning kinetics of a rough doubling of browning reaction rate for each temperature increase of 10°C, as follows:

$$\text{relative reaction browning rate} = 2^{(\Delta T/10)}.$$

**Table 5**

| Sample/ Structure | Film | Thickness (microns) | Wt (lb/ ream) | Additive | Tg (°C) | Crystallization exotherm | | Melting endotherm | | Peak load MD/CD (lbf/in) | Haze | PEL 120 | ΔΔT (°C) | Pixels | ΔUB | % Δ Imp | RBRR |
|---|---|---|---|---|---|---|---|---|---|---|---|---|---|---|---|---|---|
| | | | | | | Peak T (°C) | ΔH (J/g) | Peak T(°C) | ΔH (J/g) | | | | | | | | |
| 5-1 | BOPET | 12 | 10.4 | None | 75 | None | None | 252 | 41 | 3.97 4.19 | 3.6 | 16.9 | 0.0 | 43577 | 19264 | n/a | 1.0 |
| 5-2 | Nylon 6,6 | 25 | 17.6 | None | - | - | - | 261 | 70 | 9.50 9.00 | <8.0 | - | 16.2 | 60798 | 36485 | 89.4 | 3.1 |
| 5-3 | APET | 13 | 11.2 | None | 74 | 135 | -37 | 247 | 37 | - | - | - | - | - | - | - | - |
| 5-4 | APET | 25 | 22.4 | None | 78 | 141 | -36 | 250 | 36 | 3.97 4.19 | 2.0 | 9.0 | 24.8 | 56248 | 31935 | 65.8 | 5.6 |
| 5-5 | APET | 12 | 10.4 | None | 77 | 130,136 | -36 | 251 | 36 | - | - | - | - | - | - | - | - |
| 5-6 | APET | 20 | 17.0 | 3% Optema TC120 | 78 | 129 | -28 | 251 | 34 | 5.61 5.45 | 13.1 | 17.5 | 16.7 | 56958 | 32645 | 69.5 | 3.2 |
| 5-7 | APET | 20 | 18.9 | 5% Optema TC120 | 63,79 | 129 | -28 | 251 | 36 | 6.30 5.77 | 15.0 | 11.9 | 20.3 | 69477 | 45164 | 134.4 | 4.1 |
| 5-8 | APET | 20 | 14.0 | 3% Optema TC220 | 63,79 | 130 | -32 | 251 | 33 | 5.56 5.06 | 6.7 | 18.0 | 16.7 | 65890 | 41577 | 115.8 | 3.2 |
| 5-9 | APET | 20 | 16.7 | 5% OptemaTC220 | - | - | - | - | - | 5.39 4.74 | 14.8 | 13.5 | 25.8 | 62745 | 38432 | 99.5 | 6.0 |
| 5-10 | APET | 20 | 19.2 | 3% Engage 8401 | 62,79 | 131 | -28 | 252 | 36 | 5.96 5.34 | 11.2 | 20.5 | 17.9 | 78926 | 54613 | 183.5 | 3.5 |
| 5-11 | APET | 20 | 17.8 | 5% Engage 8401 | - | - | - | - | - | 5.83 4.73 | 21.7 | 3.6 | 29.3 | 66470 | 42157 | 118.8 | 7.6 |
| 5-12 | APET | 20 | 16.2 | 3% Sukano F35 | 60,78 | 127 | -26 | 252 | 35 | 5.24 4.79 | 7.7 | 10.1 | 35.8 | 79637 | 55324 | 187.2 | 12.0 |
| 5-13 | APET | 20 | 15.7 | 5% Sukano F35 | - | - | - | - | - | 5.27 4.21 | 10.9 | 8.6 | 30.4 | 62952 | 38639 | 100.6 | 8.2 |
| 5-14 | APET | 20 | 17.8 | 3% Americhem | 64,80 | 134 | -28 | 252 | 34 | 5.41 5.16 | 7.3 | 3.7 | 26.8 | 85485 | 61172 | 217.5 | 6.4 |
| 5-15 | APET | 20 | 15.9 | 5% Americhem | - | - | - | - | - | 5.16 4.48 | 12.8 | 6.0 | 21.8 | 75940 | 51627 | 168.0 | 4.5 |

EXAMPLE 5

Various Pure-Stat APET base films were uniaxially oriented and used to prepare susceptor structures for evaluation. Mylar® 800 biaxially oriented PET (DuPont Teijan™ Films, Hopewell, VA) was also evaluated as a control material.

Structure 6-1 was a commercially produced susceptor structure comprising commercially metallized, 48 gauge standard biaxially oriented PET laminated to paperboard, as described in Example 4. Structure 6-2 was the same as structure 6-1, except that structure 6-2 was hand laminated.

Samples 6-3 through 6-17 were unixially oriented in the machine direction on a Bruckner Karo IV Laboratory Stretching Machine (lab stretcher) (Brückner Maschinenbau GmbH & Co. KG, Siegsdorf, Germany) using the orientation and heat setting temperatures set forth in **Table 6** and a draw ratio of about 1.5:1. The oriented films were then evaluated for various properties, as indicated in **Table 6**.

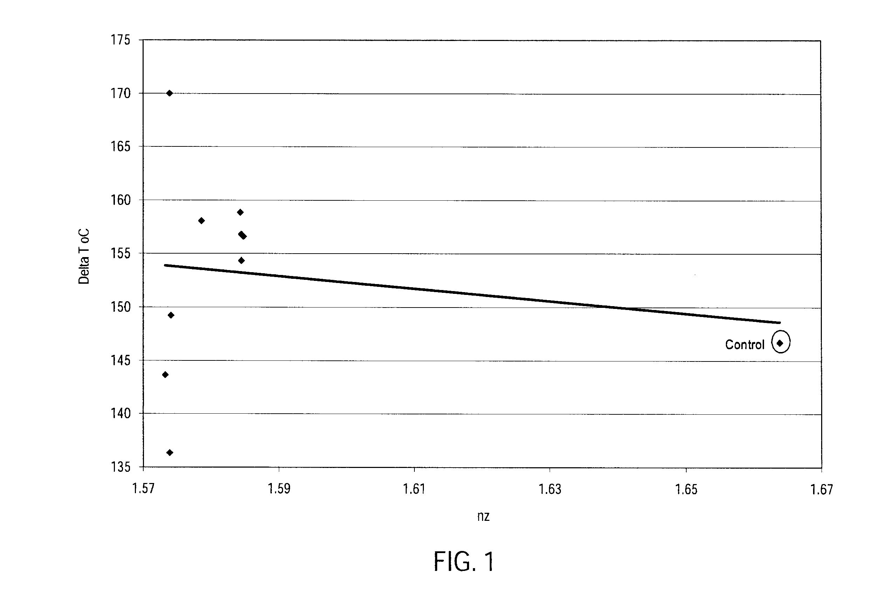

As shown in **FIG. 1**, moderate uniaxial orientation was capable of creating films with improved susceptor heating performance compared to control susceptor films. Refractive index values ($n_z$) for these samples indicate them to be largely amorphous in nature, even after moderate orientation, with some modest increase in crystallinity for several of the samples. The much higher value for ($n_z$) for the control is consistent with highly crystalline film with high residual orientation.

The films were then metallized and hand laminated to 14 pt paperboard, as described in connection with Example 4 to form various susceptor structures. Each susceptor structure was then evaluated using the calorimetry test described in Example 1. The results are presented in **Table 6**, where $\Delta T$ is the rise in temperature for the sample, and where $\Delta\Delta T$ is the difference between the rise in temperature for the sample and the rise in temperature for the control sample (structure 6-2, standard biaxially oriented, heat set PET film).

Structure 6-2 exhibited a rise in temperature very similar to that of the commercial control structure 6-1. Accordingly, structure 6-2 may be considered to be a reasonable representation of commercially available susceptor structures. Several uniaxially oriented laminated susceptor samples (6-13 and 6-15) demonstrated lower heating performance compared to the control sample. As will be noted in **Table 6**, these samples were oriented at the lowest temperatures, resulting in the highest stretching stress, and received the lowest annealing temperature exposure, minimizing relaxation of that strain. Corresponding samples 6-14 and 6-16, while oriented respectively at the same temperatures as 6-13 and 6-15, received higher annealing temperature exposure and demonstrated significantly increased heating capability compared to the control sample. These comparisons demonstrate that while this disclosure clearly demonstrates the potential to create superior susceptor structures from a wider array of materials and processing regimes, not all combinations will yield equally performing structures and care must still be exercised in choosing specific process conditions. An advantage of this embodiment is the ability to adjust heating capability of the resultant susceptor structure through relatively simple modification of orientation conditions for uniaxial orientation.

As noted above (Example 1), the absolute temperature reached for each sample was about 22°C higher than the $\Delta T$ reported since all samples had an initial temperature of about 22°C Notably, each of the samples (even ones that performed relatively poorly) exhibited temperature rises to absolute temperatures that exceed the 150°C shrink performance specification commonly used for films. Further, it is noted that 150°C is below the temperature one would reasonably expect Maillard browning reactions to occur at rates of interest for heating microwavable foods. This further reinforces that the conventional means of characterizing films for use as susceptor base films is inadequate.

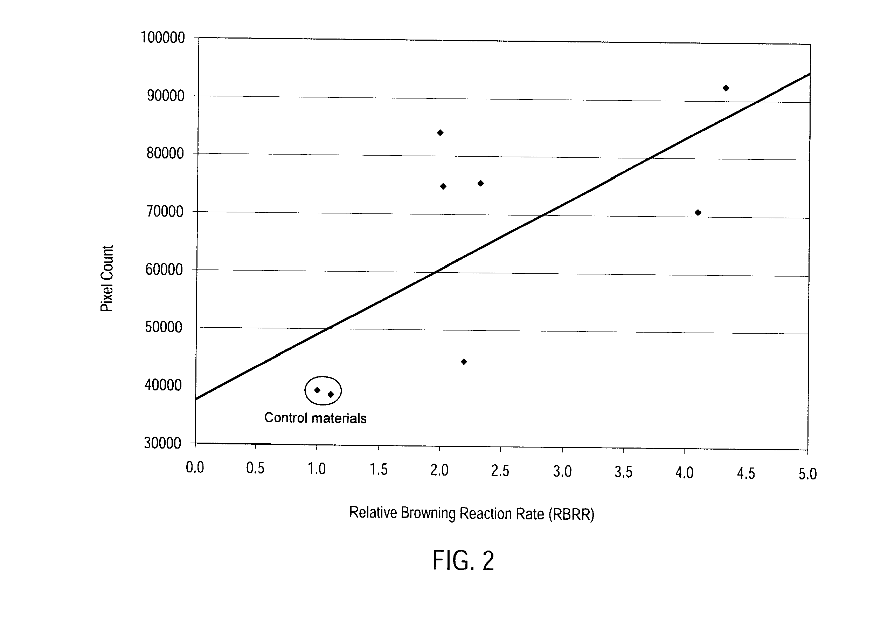

The relative reaction browning rate (RBRR) was then calculated, as described in Example 4. Additionally, each structure was evaluated using the pizza browning test described in Example 4. The browning test results are presented in **FIG. 2.** Given variation in pizza formulation and resultant different temperature increase dynamics, the relative browning rate based on $\Delta\Delta T$ calorimetry normalized to the $\Delta T$ of the control materials provided a reasonable prediction of browning pixel count and was confirmed by visual examination of the pizzas.

**Table 6**

| Sample/Structure | Film | Initial thickness (microns) | Orient temp (°C) | Heat set temp (°C) | Final thickness (microns) | % Cryst by density | Tg (°C) | Crystallization exotherm Peak T(°C) | $\Delta H$ (J/g) | Melting endotherm Peak T(°C) | $\Delta H$ (J/g) | $n_z$ (MD) | $n_z$-$n_x$ | Peak stress MD ($lb_f$/in) | Peak stress CD ($lb_f$/in) | $\Delta T$ (°C) | $\Delta\Delta T$ (°C) | RBRR | Pixel count |
|---|---|---|---|---|---|---|---|---|---|---|---|---|---|---|---|---|---|---|---|
| 6-1 | Clear | - | - | - | 12 | 53 | - | - | - | - | - | 1.6644 | 0.1707 | - | - | 148.2 | 1.5 | 1.1 | 38,665 |
| 6-2 | Clear | - | - | - | 12 | - | - | - | - | - | - | 1.6639 | 0.1704 | 17,759 | 18,536 | 146.7 | 0.0 | 1.0 | 39,381 |
| 6-3 | White | 28 | 120 | 140 | 19 | - | - | - | - | - | - | - | - | - | - | 155.1 | 8.4 | 1.8 | - |
| 6-4 | White | 28 | 120 | 170 | 19 | - | - | - | - | - | - | - | - | - | - | 161.3 | 14.6 | 2.7 | - |
| 6-5 | White | 28 | 120 | 220 | 19 | - | - | - | - | - | - | - | - | - | - | 167.1 | 20.4 | 4.1 | 70,768 |
| 6-6 | Clear | 20 | 120 | 140 | 12 | 5.4 | 81 | 135 | -32 | 251 | 34 | 1.5741 | 0.0010 | - | - | 149.2 | 2.5 | 1.2 | - |
| 6-7 | White | 20 | 120 | 140 | 12 | - | 80 | 132 | -29 | 251 | 32 | - | - | - | - | 154.4 | 7.7 | 1.7 | - |
| 6-8 | Clear | 20 | 120 | 170 | 12 | 12.1 | 80 | 125 | -23 | 251 | 33 | 1.5845 | -0.0044 | - | - | 154.3 | 7.6 | 1.7 | - |
| 6-9 | Clear | 20 | 120 | 200 | 12 | 29.9 | 80 | 122 | -7 | 239,251 | 28 | 1.5848 | -0.0130 | - | - | 156.6 | 9.9 | 2.0 | 84,043 |
| 6-10 | White | 20 | 120 | 200 | 12 | - | 82 | 124 | -5 | 238,251 | 29 | - | - | - | - | 167.8 | 21.1 | 4.3 | 92,318 |
| 6-11 | Clear | 20 | 120 | 230 | 12 | 7.3 | 80 | 126 | -26 | 251 | 33 | 1.5739 | 0.0003 | - | - | 170.0 | 23.3 | 5.0 | 94,175 |
| 6-12 | Clear | 20 | 120 | 220 | 12 | - | - | - | - | - | - | - | - | 7,237 | 7,940 | 163.4 | 16.7 | 3.2 | - |
| 6-13 | Clear | 28 | 95 | 140 | 19 | 5.3 | - | 130 | -30 | 251 | 35 | 1.5739 | 0.0022 | 6,961 | 6,903 | 136.4 | -10.3 | 0.5 | - |
| 6-14 | Clear | 28 | 95 | 200 | 19 | - | - | 123 | -6 | 251 | 29 | 1.5845 | -0.0013 | 7,419 | 10,057 | 156.8 | 10.1 | 2.0 | 74,844 |
| 6-15 | Clear | 28 | 105 | 140 | 19 | 5.4 | - | 132 | -28 | 251 | 34 | 1.5733 | 0.0024 | 7,315 | 7,433 | 143.7 | -3.0 | 0.8 | - |
| 6-16 | Clear | 28 | 105 | 200 | 19 | - | - | 122 | -6 | 252 | 32 | 1.5844 | -0.0045 | 7,142 | 9,259 | 158.9 | 12.2 | 2.3 | 75,434 |
| 6-17 | Clear | 28 | 120 | 230 | 19 | - | - | 123 | -12 | 251 | 34 | 1.5786 | -0.0090 | 8,158 | 7,989 | 158.1 | 11.4 | 2.2 | 44,611 |

EXAMPLE 6

Various films were biaxially oriented and used to prepare susceptor structures for evaluation. Homopolymer (HP) films, copolymer (CP) films, and coextruded (CX) films were evaluated. The films for orienting were produced by Pacur (PACUR, Oshkosh, WI) on standard sheet extrusion equipment. Homopolymer films were produced from PQB15-093 homopolymer PET resin supplied by Polyquest (Polyquest, Inc., Wilmington, NC), the copolymer films were produced from SKYPET-BR 8040 copolyester (SKC Chemicals, Seoul, South Korea), and the coextruded films were an A/B/A three layer coextruded structure with 2-15% copolyester skin (A) layers encapsulating a 70% homopolymer core (B) layer using the resins described above.

The films were oriented using a using a Karo series lab stretching machine with the conditions set forth in **Table 7**. The films were then metallized by taping sheets of the lab stretching machine oriented samples to a full size roll of 48 gauge standard biaxially oriented PET and running the roll through the metallizer at commercial conditions (within a normal range of parameters). The metallized sheet samples were removed, and then hand laminated to form susceptor structures. Hand laminated film samples were laminated to 0,305 mm (0,012") uncoated SBS paperboard (International Paper, Memphis, TN) using a No. 10 Mayer rod to apply Royal Hydra Fast-en Bond-Plus 20123 adhesive (Royal Adhesives and Sealants, South Bend, IN) and laminated with a Cheminstruments Laboratory Laminator (Cheminstruments, Inc., Fairfield, OH) set at 344,7 kPa (50 psi) nip loading and speed 4.

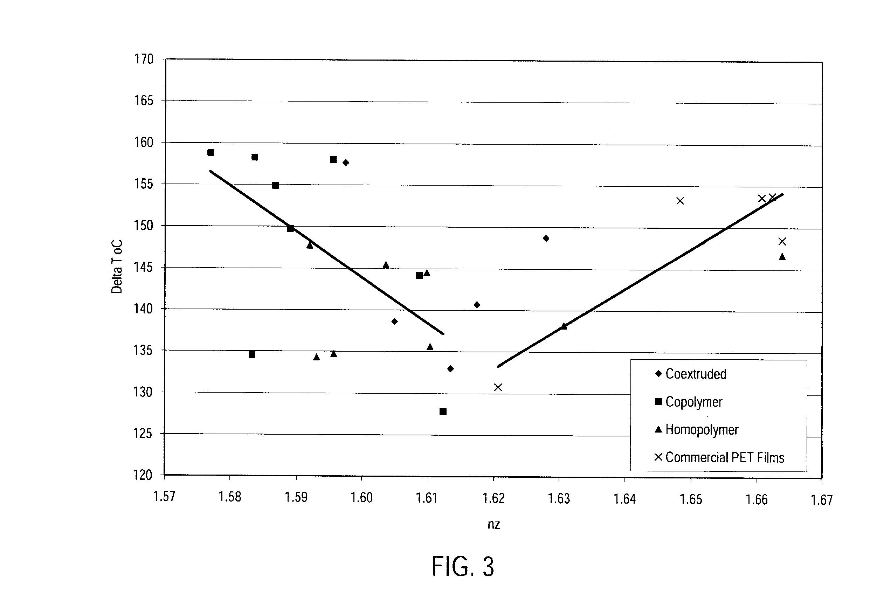

Refractive index and birefringence was obtained for various samples. As shown in **FIG. 3**, lower residual orientation and crystallinity provides the ability to enter a new and superior susceptor heating regime compared to commercially standard highly oriented homopolymer PET films.

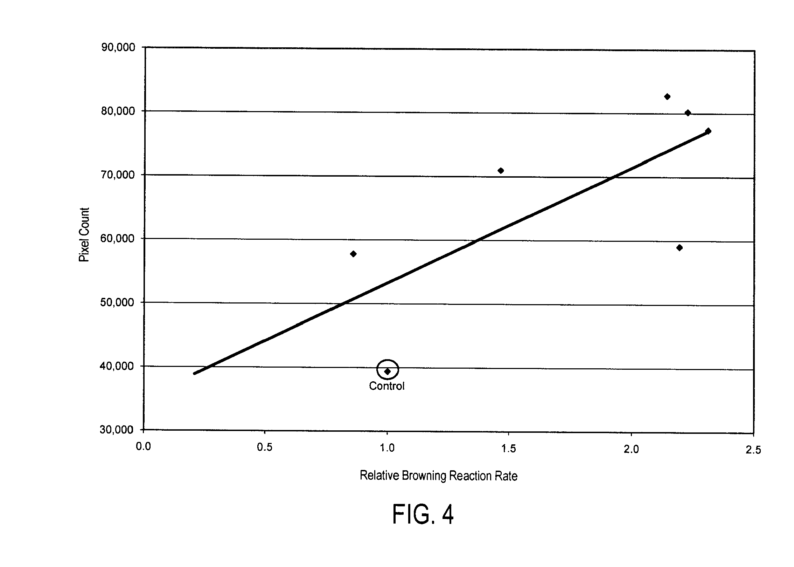

Each susceptor structure was evaluated using the calorimetry test described in Example 1 and pizza browning test described in Example 4, and a relative browning reaction rate (RBRR) was calculated as described in Example 5. The results are presented in **Table 7** and **FIG. 4**, in which samples/susceptor structures 6-1 and 6-2 (from Example 6) are included for comparison.

Structure 6-2 (the hand laminated commercial control from Example 6) exhibited a temperature rise of 146.7°C. This corresponds closely to structure 7-1 (which was oriented on the lab scale stretching machine), which exhibited a temperature rise of 145.5°C. Accordingly, for purposes of this discussion, structure 7-1 represents a reasonable simulation of a commercial susceptor film material. Structure 7-2, which was similar to structure 7-1 (except that the orientation level was 3.8 x 3.8), exhibited a rise in temperature of only 134.7°C. Thus, there was a decrease in performance at the lower orientation level for this lab stretched homopolymer PET film based susceptor.

Structure 7-17, which comprised the lower melting point copolyester (with all other conditions being the same as structure 7-2), exhibited a rise in temperature of 154.9°C, which was greater than any of the structures made from a homopolymer base film, including the commercial control (structure 6-2). Structure 7-18, which had an increased degree of orientation, exhibited an increase in temperature of 158.8°C. In contrast, structure 7-21, which had a lower orientation temperature and a lower degree of orientation, showed only a temperature increase of 125.4°C. It will be noted that while this performance may not be acceptable for most microwave heating applications, there are other applications in which lower heating capacity may be desirable. Finally, structure 7-19, which was made with a greater annealing (i.e., heat set) temperature than structure 7-21, the rise in temperature was 144.2°C. It will be noted that the corresponding value for a homopolymer susceptor base film made under the same conditions was 138.2°C (structure 7-6).

Additionally, it will be noted that an increase in orientation temperature from 120°C to 125°C resulted in a nearly 4°C increase in $\Delta T$ (see structures 7-17 and 7-18) with copolymer (also went from 3.8 x 3.8 to 4x4), while the same increase in orientation temperature results in only about a 2.3°C increase in $\Delta T$ with homopolymer (see structures 7-1 and 7-3 with homopolymer (at 4x4 for both temps).

Coextruded structures appear to be somewhat more sensitive to process conditions, but are still capable of superior calorimetry and pizza browning results when higher stretching temperatures and higher annealing temperatures are employed. In fact, the best pizza browning of this set of samples was achieved by coextruded sample 7-26. Without wishing to be bound by theory it is believed that the presence of both homopolymer PET and copolyester layers of the structure results in something of a 'mixed mode' for orientation, crystallization and relaxation and may result in a somewhat narrower window of process operating conditions. However, since it has been shown possible to create superior heating susceptors using this film, they are commercially useful as potential cost reductions compared to 100% copolyester films and may provide other useful functionality, such as when a surface copolyester layer is used as a heat seal material.

**FIG. 4** plots calorimetry based relative browning rate vs. pixel count from actual pizza cooking tests; these data confirm that within the limitations of pizza variability and cooking dynamics a clear positive correlation exists between the calorimetry results and actual food browning results.

# Table 7

| Sample/ Structure | Material | Initial thickness (microns) | Orient temp (°C) | Heat set temp (°C) | Stretch ratio | Final thickness (microns) | % Cryst by density | Tg (°C) | Crystallization exotherm Peak T (°C) | Crystallization exotherm ΔH (J/g) | Melting endotherm Peak T (°C) | Melting endotherm ΔH (J/g) | $n_z$ (MD) | $n_z$-$n_x$ | Peak stress MD (lbf/in) | Peak stress CD (lbf/in) | ΔT (°C) | ΔΔT (°C) | RBRR | Pixel count |
|---|---|---|---|---|---|---|---|---|---|---|---|---|---|---|---|---|---|---|---|---|
| 6-1 | HP | - | - | - | - | - | 53 | - | - | - | - | - | 1.6644 | 0.1707 | - | - | 148.2 | 1.5 | 1.1 | 38,665 |
| 6-2 | HP | - | - | - | - | 12 | - | - | - | - | - | - | 1.6639 | 0.1704 | 17,759 | 18,536 | 146.7 | 0.0 | 1.0 | 39,381 |
| 7-1 | HP | 200 | 120 | 140 | 4 x 4 | 12.5 | 36.4 | - | - | - | 253 | 44 | 1.6037 | 0.1015 | 12,069 | 18,651 | 145.5 | -1.2 | 0.9 | - |
| 7-2 | HP | 200 | 120 | 140 | 3.8x3.8 | 13.9 | 34.6 | - | - | - | 252 | 42 | 1.5957 | 0.0770 | 10,475 | 15,675 | 134.7 | -12.0 | 0.4 | - |
| 7-3 | HP | 200 | 125 | 140 | 4 x 4 | 12.5 | - | - | 118 | -4 | 253 | 41 | 1.5920 | 0.0356 | 6,908 | 8,249 | 147.8 | 1.1 | 1.1 | - |
| 7-4 | HP | 200 | 115 | 140 | 3.8x3.8 | 13.9 | 36.8 | - | - | - | 253 | 46 | 1.6104 | 0.1055 | 11,146 | 20,471 | 135.6 | -11.1 | 0.5 | - |
| 7-5 | HP | 200 | 115 | 140 | 3.5x3.5 | 16.3 | 37.6 | - | 137 | -1 | 254 | 45 | 1.6099 | 0.1038 | 10,534 | 15,586 | 144.5 | -2.2 | 0.9 | 57,812 |
| 7-6 | HP | 200 | 115 | 200 | 3.5x3.5 | 16.3 | 40.5 | - | - | - | 179, 253 | 2, 43 | 1.6307 | 0.1253 | 15,779 | 25,987 | 138.2 | -8.5 | 0.6 | - |
| 7-7 | HP | 200 | 125 | 200 | 4 x 4 | 12.5 | 40.2 | - | - | - | 210, 252 | 1, 39 | 1.5931 | 0.0551 | 7,280 | 9,698 | 134.3 | -12.4 | 0.4 | - |
| 7-8 | CP | 200 | 120 | 140 | 4 x 4 | 12.5 | 25.8 | 87 | 147 | -1 | 236 | 32 | 1.5956 | 0.0480 | - | - | 158.1 | 11.4 | 2.2 | 59,071 |
| 7-9 | CP | 200 | 120 | 200 | 4 x 4 | 12.5 | 15.1 | 77 | 124 | -11 | 237 | 29 | 1.5890 | 0.0306 | - | - | 149.7 | 3.0 | 1.2 | - |
| 7-10 | CP | 200 | 120 | 220 | 4 x 4 | 12.5 | - | - | - | - | - | - | - | - | - | - | 152.2 | 5.5 | 1.5 | 71,018 |
| 7-11 | CP | 172 | 120 | 140 | 3 x 3 | 19.1 | - | - | - | - | - | - | - | - | - | - | 124.1 | -22.6 | 0.2 | - |
| 7-12 | CP | 172 | 120 | 200 | 3 x 3 | 19.1 | - | - | - | - | - | - | - | - | - | - | 130.0 | -16.7 | 0.3 | - |
| 7-13 | CP | 172 | 120 | 220 | 3 x 3 | 19.1 | - | - | - | - | - | - | - | - | - | - | 149.9 | 3.2 | 1.2 | - |
| 7-14 | CP | 127 | 120 | 140 | 3 x 3 | 14.1 | - | - | - | | | | | | - | - | 147.4 | 0.7 | 1.0 | - |
| 7-15 | CP | 127 | 120 | 200 | 3 x 3 | 14.1 | 6.7 | 66,77 | 124 | -18 | 237 | 29 | 1.5833 | 0.0028 | - | - | 134.5 | -12.2 | 0.4 | - |
| 7-16 | CP | 127 | 120 | 140 | 2 x 2 | 31.8 | - | - | - | - | | | | | - | - | 128.9 | -17.8 | 0.3 | - |
| 7-17 | CP | 200 | 120 | 140 | 3.8x3.8 | 13.9 | - | - | - | - | 235 | 34 | 1.5868 | 0.0575 | 8,317 | 10,300 | 154.9 | 8.2 | 1.8 | - |
| 7-18 | CP | 200 | 125 | 140 | 4 x 4 | 12.5 | - | 78 | 124 | -26 | 237 | 29 | 1.5769 | 0.0086 | 4,841 | - | 158.8 | 12.1 | 2.3 | 77,367 |
| 7-19 | CP | 200 | 115 | 200 | 3.5x3.5 | 16.3 | - | - | - | - | 205, 236 | 1, 33 | 1.6088 | 0.0849 | 10,461 | 17,744 | 144.2 | -2.5 | 0.8 | - |
| 7-20 | CP | 200 | 125 | 200 | 4 x 4 | 12.5 | - | 78 | 122 | -14 | 236 | 27 | 1.5836 | 0.0152 | 4,389 | 4,536 | 158.3 | 11.6 | 2.2 | 80,221 |
| 7-21 | CP | 200 | 115 | 140 | 3.5x3.5 | 16.3 | - | - | - | - | 238 | 37 | 1.6124 | 0.1022 | 15,849 | 25,161 | 127.9 | -18.8 | 0.3 | - |
| 7-22 | CX | 200 | 115 | 140 | 3.5x3.5 | 16.3 | - | - | 120 | -2 | 241, 252 | 34 | 1.6135 | 0.1181 | 10,541 | 14,085 | 133.0 | -13.7 | 0.4 | - |
| 7-23 | CX | 200 | 120 | 140 | 3.5x3.5 | 16.3 | - | 79 | 122 | -20 | 239, 252 | 34 | 1.6050 | 0.1097 | 9,425 | 10,778 | 138.6 | -8.1 | 0.6 | - |
| 7-24 | CX | 200 | 125 | 140 | 3.5x3.5 | 16.3 | - | 78 | 129 | -23 | 240, 252 | 32 | 1.6175 | 0.0869 | 8,604 | 8,770 | 140.7 | -6.0 | 0.7 | - |
| 7-25 | CX | 200 | 115 | 200 | 3.5x3.5 | 16.3 | - | - | - | - | 183, 241, 253 | 1, 35 | 1.6280 | 0.1355 | 9,261 | 13,260 | 148.7 | 2.0 | 1.1 | - |
| 7-26 | CX | 200 | 125 | 200 | 3.5x3.5 | 16.3 | - | 78 | 127 | -24 | 241, 252 | 31 | 1.5975 | 0.0654 | 7,494 | 7,765 | 157.7 | 11.0 | 2.1 | 82,757 |

EP 2 459 624 B1

EXAMPLE 7

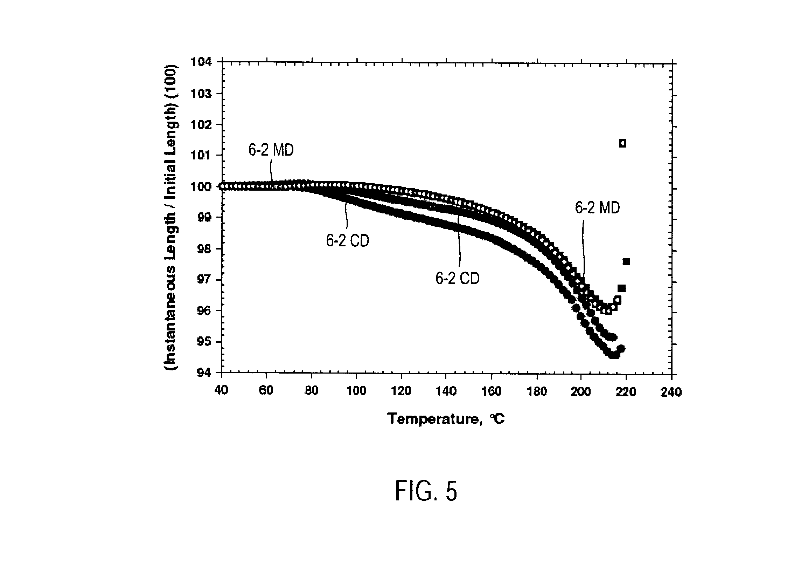

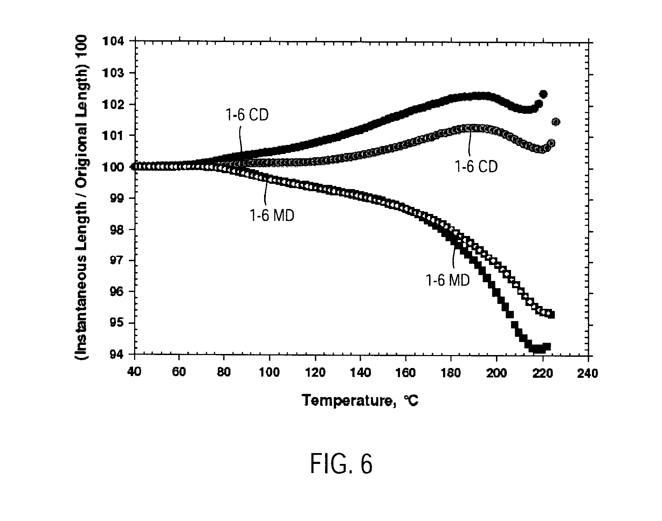

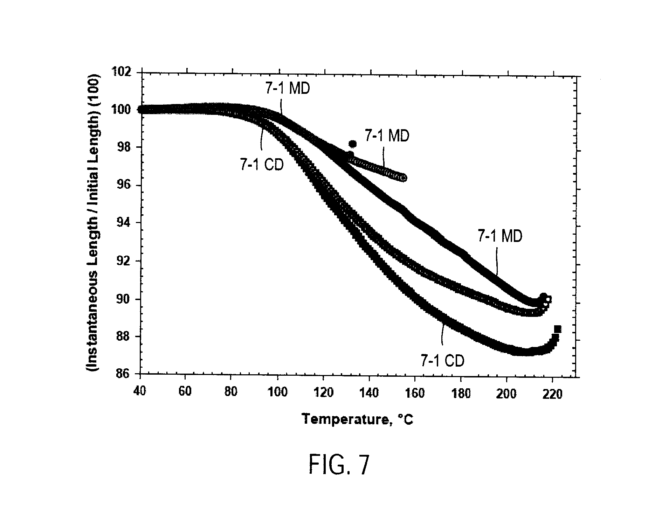

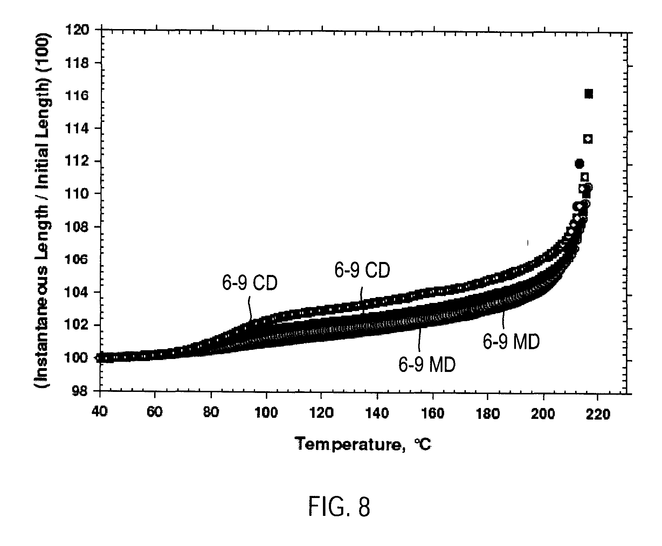

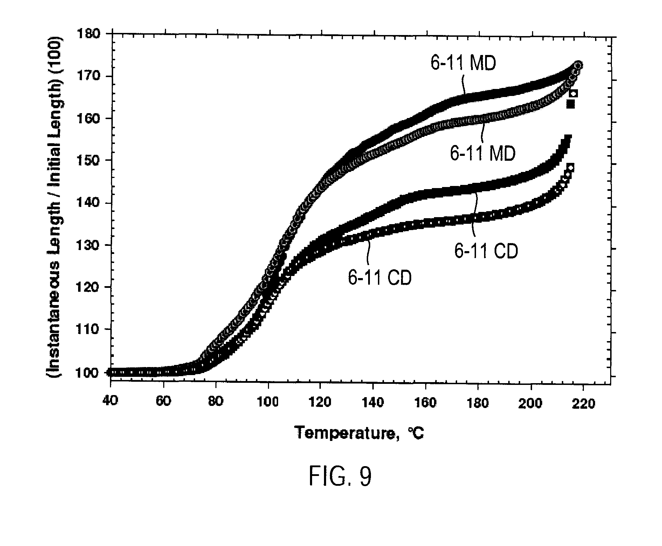

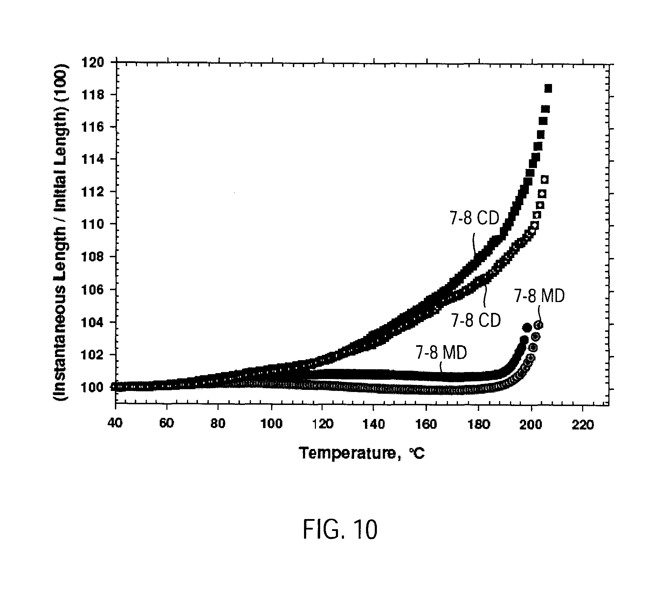

To demonstrate the significantly different dynamic dimensional temperature responses of films of this disclosure compared to standard susceptor films of the prior art, changes in sample lengths were monitored as functions of temperature using a Perkin-Elmer (Perkin-Elmer Inc., Waltham, MA) DMA 7e. The instrument was used in the constant force, thermal mechanical analysis mode. Samples were heated from 40 to 220°C at 2.5°C per minute under a helium purge, with a constant static force of 10 mN. An extension analysis measuring system was used with samples cut 3.2 mm wide, with thickness depending on the films to be measured and with gauge lengths of about 10 mm. An ice/water bath was used to aid with furnace temperature control. Measurements were performed on strips of film cut in the machine direction (MD) or transverse/cross direction (CD). Examples of the dimensional changes, recorded while heating the film samples, are given in **FIGS. 5-10**. Values were calculated in terms of percent change compared to the original sample length before heating as follows:

$$\text{\% change in sample length} = (\text{instantaneous length during heating / original length}) \times (100).$$

A characteristic of this test method that affects displayed results is important to clarify for proper data interpretation. A very slight tension is applied to the ends of the sample to ensure accuracy in the measurement of instantaneous length used to calculate the % change in sample length. Samples show % change values less than 100 (shrinkage) by overcoming this slight tensional force and become shorter (shrink) as temperatures are reached at which residual shrink energy is released. Samples that indicate expansion (values greater than 100%) in curves generated by this test should not be considered to have an intrinsic growth or expansion characteristic at increasing temperatures. Above $T_g$, films with little or no tendency for dimensional change at a particular temperature will tend to be susceptible to slight stretching by the sample holding tension at that temperature and the curve will erroneously imply that growth or expansion would occur under conditions of no tensional load. Films that are more highly oriented and/or crystalline possess less remaining elongational capability in the rubbery state and will be expected to be more resistant to this stretching and indication of false expansion than will films with lower levels of orientation and crystallinity.

**Table 8** identifies the films for which dynamic dimensional temperature response curves are shown; three films representing conventional highly oriented, highly crystalline, high refractive index and birefringence standard PET homopolymer films are compared with three films representing several embodiments of the present disclosure, all of which demonstrate superior susceptor performance.

**Table 8**

| Structure | Description | $n_z$ | $n_z\text{-}n_x$ | $\Delta T$ (°C) | $\Delta\Delta T$ (°C) | RBRR |
|---|---|---|---|---|---|---|
| 6-2 | DuPont Mylar® 800C | 1.6639 | 0.1704 | 146.7 | 0 | 1.0 |
| 1-6 | DuPont HS2 | 1.6587 | 0.1662 | 152.0 | 9.2 | - |
| 7-1 | Homopolymer, biaxially oriented (commercial simulation) | 1.6037 | 0.1015 | 145.5 | -1.2 | 0.9 |
| 6-9 | Homopolymer, biaxially oriented | 1.5848 | -0.0130 | 156.6 | 9.9 | 2.0 |
| 6-11 | Homopolymer, uniaxially oriented | 1.5739 | 0.0003 | 170.0 | 23.3 | 5.0 |
| 7-8 | Copolymer, biaxially oriented | 1.5956 | 0.0480 | 158.1 | 11.4 | 2.2 |

Samples 6-2, 1-6, and 7-1 are all homopolymer PET highly oriented films representing a common commercial susceptor base film (sample 6-2), a heat stabilized film of the prior art (1-6) and a laboratory stretched film targeted to simulate the properties and performance of a film similar to sample 6-2 (sample 7-1). Samples 6-9, 6-11, and 7-8 are all lab stretching machine oriented samples of the present disclosure. Samples 6-9 and 6-11 are moderately uniaxially oriented films of the present disclosure made from homopolymer PET, with sample 6-11 exposed to a higher heat set temperature than sample 6-9; sample 7-8 is a highly oriented film of the present disclosure made from a copolyester with a melting point below that of typical homopolymer PET.

**FIGS. 5-10** trace the dynamic dimensional temperature responses of these films. Duplicate runs for each film in MD and CD are shown in each figure. Of immediate note is that all 6 samples begin with some response to increased temperature at about 80°C, roughly $T_g$ for PET. This is to be expected as the polymer transitions from the glassy state to the rubbery state. Notably, as samples 6-2, 1-6, and 7-1 continue to increase in temperature, meaningful shrinkage occurs in the MD for all samples and CD for all but sample 1-6, and continues to increase with increased temperature, especially at temperatures above 150°C, the static exposure temperature for shrinkage measurements typically referenced as representing a good predictor of susceptor performance.

The dynamic dimensional temperature response of these films represents shrinkage behavior that leads to typical crazing in a laminated susceptor structure and limited heating capability; the calorimetry data for these three samples indicates this limitation in heating. Sample 1-6 appears to grow slightly in the CD, which is likely the result of somewhat enhanced thermal stability in that direction compared to the MD and the false expansion indication discussed above, but shrinks significantly in the MD at temperatures commonly encountered and desired in susceptor heating. While sample 1-6 shows some increased heating capability compared to samples 6-2 and 7-1, it is still inferior to susceptors made according to this disclosure. The greater magnitude of shrinkage seen in sample 7-1 compared to sample 6-2 is expected to result from differences between commercial machine and lab stretching equipment, but significantly, susceptors made from the two films perform quite similarly in heating and cook tests. This confirms that past a threshold of craze initiation, susceptor performance is lost in an essentially irretrievable manner.

Samples 6-9, 6-11, and 7-8, all of which are experimental films of the present disclosure that provide superior heating to the three standard type films, reacted quite differently to increased temperature, evidencing no shrinkage in either MD or CD over the same temperature range where the standard films shrink. Likewise, all of the superior performing susceptors of this disclosure that were tested according to this method (including, for example, samples 5-6, 5-7, 5-8, 5-10, 5-12, and 5-14), exhibited similar behavior. Taking into account the false expansion indication of the test method, for susceptor use, these films may be considered to be dimensionally stable and should resist crazing onset in a superior fashion; calorimetry and browning tests confirm this superior performance.

The dramatic difference in dynamic dimensional temperature response is consistent with maintenance of low residual orientation as evidenced by reduced levels of refractive index and birefringence as well as reduced crystallinity in susceptor base films and represents strong evidence of the novelty of the various aspects of this invention and its reduction to practice in a highly useful manner.

While the present invention is described herein in detail in relation to specific aspects and embodiments, it is to be understood that this detailed description is only illustrative and exemplary of the present invention and is made merely for purposes of providing a full and enabling disclosure of the present invention and to set forth the best mode of practicing the invention known to the inventors at the time the invention was made. The detailed description set forth herein is illustrative only and is not intended, nor is to be construed, to limit the present invention or otherwise to exclude any such other embodiments, adaptations, variations, modifications, and equivalent arrangements of the present invention. All directional references (e.g., upper, lower, upward, downward, left, right, leftward, rightward, top, bottom, above, below, vertical, horizontal, clockwise, and counterclockwise) are used only for identification purposes to aid the reader's understanding of the various embodiments of the present invention, and do not create limitations, particularly as to the position, orientation, or use of the invention unless specifically set forth in the claims. Joinder references (e.g., joined, attached, coupled, connected, and the like) are to be construed broadly and may include intermediate members between a connection of elements and relative movement between elements. As such, joinder references do not necessarily imply that two elements are connected directly and in fixed relation to each other. Further, various elements discussed with reference to the various embodiments may be interchanged to create entirely new embodiments coming within the scope of the present invention.

**Claims**

1. A microwave energy interactive structure, comprising:

   a polymer film having a birefringence ($n_z$-$n_x$) of less than about 0.15; and
   a layer of microwave energy interactive material on the polymer film, the layer of microwave energy interactive material being operative for converting at least a portion of impinging microwave energy into thermal energy.

2. The structure of claim 1, wherein the polymer film has a birefringence ($n_z$-$n_x$) of less than about 0.14.

3. The structure of claim 1, wherein the polymer film has a birefringence ($n_z$-$n_x$) of less than about 0.10.

4. The structure of claim 1, wherein the polymer film has a birefringence ($n_z$-$n_x$) of less than about 0.015.

5. The structure of claim 1, wherein

   (a) the polymer film comprises amorphous polyethylene terephthalate, and the polymer film has a birefringence ($n_z$-$n_x$) of less than about 0.005;

(b) the polymer film comprises uniaxially oriented polyethylene terephthalate, and the polymer film has a birefringence ($n_z$-$n_x$) of less than about 0.05; or
(c) the polymer film comprises a copolyester having a melting point of less than about 260°C, and the polymer film has a birefringence ($n_z$-$n_x$) of less than about 0.15.

6. The structure of claim 1, wherein
the polymer film comprises polyethylene terephthalate homopolymer and a copolyester, the copolyester having a melting point of less than about 260°C, and
the polymer film has a birefringence ($n_z$-$n_x$) of less than about 0.15.

7. The structure of claim 6, wherein the polymer film comprises a plurality of layers including

(a) at least one layer comprising polyethylene terephthalate homopolymer, and
at least one other layer comprising a copolyester;
(b) a first layer comprising polyethylene terephthalate homopolymer,
a second layer comprising a copolyester, and
a third layer comprising polyethylene terephthalate homopolymer, the second layer being disposed between the first layer and the second layer; or
(c) a first layer comprising a copolyester,
a second layer comprising polyethylene terephthalate homopolymer, and
a third layer comprising a copolyester, the second layer being disposed between the first layer and the second layer.

8. The structure of any of claims 1 to 7, wherein the polymer film has a crystallinity of less than about 50%.

9. The structure of any of claims 1 to 7, wherein the polymer film has a crystallinity of less than about 25%.

10. The structure of any of claims 1 to 7, wherein the polymer film has a crystallinity of less than about 10%.

11. The structure of any of claims 1 to 7, wherein the polymer film has a crystallinity of about 5%.

12. The structure of any of claims 1 to 11, wherein the polymer film has a refractive index ($n_z$) of less than about 1.64.

13. The structure of any of claims 1 to 11, wherein the polymer film has a refractive index ($n_z$) of from about 1.57 to about 1.62.

14. The structure of any of claims 1 to 13, further comprising a support layer joined to the layer of microwave energy interactive material such that the layer of microwave energy interactive material is disposed between the polymer film and the support layer, wherein the support layer comprises paper, paperboard, a polymer film, or any combination thereof.

15. The structure of any of claims 1 to 14, comprising at least a portion of a microwave heating construct for heating, browning, and/or crisping a food item in a microwave oven.

**Patentansprüche**

1. Struktur, interaktive mit Mikrowellenenergie, umfassend:

einen Polymerfilm mit einer Doppelbrechung ($n_z$-$n_x$) von weniger als ungefähr 0,15; und
eine Lage von mit Mikrowellenenergie interaktivem Material auf dem Polymerfilm, wobei die Lage von mit Mikrowellenenergie interaktivem Material zum Umwandeln von wenigstens einem Anteil der eintreffenden Mikrowellenenergie in Wärmeenergie wirkt.

2. Struktur nach Anspruch 1, wobei der Polymerfilm eine Doppelbrechung ($n_z$-$n_x$) von weniger als ungefähr 0,14 aufweist.

3. Struktur nach Anspruch 1, wobei der Polymerfilm eine Doppelbrechung ($n_z$-$n_x$) von weniger als ungefähr 0,10 aufweist.

**4.** Struktur nach Anspruch 1, wobei der Polymerfilm eine Doppelbrechung ($n_z$-$n_x$) von weniger als ungefähr 0,015 aufweist.

**5.** Struktur nach Anspruch 1, wobei

(a) der Polymerfilm amorphes Polyethylenterephtalat umfasst und der Polymerfilm eine Doppelbrechung ($n_z$-$n_x$) von weniger als ungefähr 0,005 aufweist;
(b) der Polymerfilm uniaxial ausgerichtetes Polyethylenterephtalat umfasst und der Polymerfilm eine Doppelbrechung ($n_z$-$n_x$) von weniger als ungefähr 0,05 aufweist; oder
(c) der Polymerfilm ein Copolyester mit einem Schmelzpunkt von weniger als ungefähr 260°C umfasst und

der Polymerfilm eine Doppelbrechung ($n_z$-$n_x$) von weniger als ungefähr 0,15 aufweist.

**6.** Struktur nach Anspruch 1, wobei
der Polymerfilm Polyethylenterephtalathomopolymer und ein Copolyester umfasst, wobei das Copolyester einen Schmelzpunkt von weniger als ungefähr 260°C aufweist, und
der Polymerfilm eine Doppelbrechung ($n_z$-$n_x$) von weniger als ungefähr 0,15 aufweist.

**7.** Struktur nach Anspruch 6, wobei der Polymerfilm eine Mehrzahl von Lagen umfasst, darunter

(a) wenigstens eine Lage, welche Polyethylenterephtalathomopolymer umfasst, und wenigstens eine weitere Lage mit einem Copolyester;
(b) eine erste Lage mit Polyethylenterephtalathomopolymer,
eine zweite Lage mit einem Copolyester und
eine dritte Lage mit Polyethylenterephtalathomopolymer, wobei die zweite Lage zwischen der ersten und der dritten Lage angeordnet ist; oder
(c) eine erste Lage mit einem Copolyester,
eine zweite Lage mit Polyethylenterephtalathomopolymer und
eine dritte Lage mit einem Copolyester, wobei die zweite Lage zwischen der ersten und der dritten Lage angeordnet ist.

**8.** Struktur nach einem beliebigen der Ansprüche 1 bis 7, wobei der Polymerfilm eine Kristallinität von weniger als ungefähr 50% aufweist.

**9.** Struktur nach einem beliebigen der Ansprüche 1 bis 7, wobei der Polymerfilm eine Kristallinität von weniger als ungefähr 25% aufweist.

**10.** Struktur nach einem beliebigen der Ansprüche 1 bis 7, wobei der Polymerfilm eine Kristallinität von weniger als ungefähr 10% aufweist.

**11.** Struktur nach einem beliebigen der Ansprüche 1 bis 7, wobei der Polymerfilm eine Kristallinität von weniger als ungefähr 5% aufweist.

**12.** Struktur nach einem beliebigen der Ansprüche 1 bis 11, wobei der Polymerfilm einen Brechungsindex ($n_z$) von weniger als ungefähr 1,64 aufweist.

**13.** Struktur nach einem beliebigen der Ansprüche 1 bis 11, wobei der Polymerfilm einen Brechungsindex ($n_z$) von weniger als ungefähr 1,57 bis ungefähr 1,62 aufweist.

**14.** Struktur nach einem beliebigen der Ansprüche 1 bis 13, des Weiteren umfassend eine Tragelage, welche zur Lage von mit Mikrowellenenergie interaktivem Material hinzugefügt ist, so dass die Lage von mit Mikrowellenenergie interaktivem Material zwischen dem Polymerfilm und der Tragelage angeordnet ist, wobei die Tragelage Papier, Karton, ein Polymerfilm oder eine Kombination davon ist.

**15.** Struktur nach einem beliebigen der Ansprüche 1 bis 14, umfassend wenigstens einen Abschnitt eines Mikrowellenerwärmungskonstrukt zum Erwärmen, zum Bräunen und/oder zum Knusprigbraten eines Lebensmittelartikels in einem Mikrowellenherd.

**Revendications**

1. Structure sensible à l'énergie microonde, comprenant :

   un film polymère présentant une biréfringence ($n_z$-$n_x$) inférieure à environ 0,15 ; et
   une couche de matériau sensible à l'énergie microonde sur le film polymère, la couche de matériau sensible à l'énergie microonde étant opérationnelle pour convertir au moins une partie de l'énergie microonde incidente en énergie thermique.

2. Structure selon la revendication 1, dans laquelle le film polymère présence une biréfringence ($n_z$-$n_x$) inférieure à environ 0,14.

3. Structure selon la revendication 1, dans laquelle le film polymère présence une biréfringence ($n_z$-$n_x$) inférieure à environ 0,10.

4. Structure selon la revendication 1, dans laquelle le film polymère présence une biréfringence ($n_z$-$n_x$) inférieure à environ 0,015.

5. Structure selon la revendication 1, dans laquelle

   (a) le film polymère comprend du polyéthylène téréphtalate amorphe, et
   le film polymère présente une biréfringence ($n_z$-$n_x$) inférieure à environ 0,005 ;
   (b) le film polymère comprend du polyéthylène téréphtalate orienté uniaxialement, et
   le film polymère présente une biréfringence ($n_z$-$n_x$) inférieure à environ 0,05 ; ou
   (c) le film polymère comprend un copolyester présentant un point de fusion inférieur à environ 260°C, et
   le film polymère présente une biréfringence ($n_z$-$n_x$) inférieure à environ 0,15.

6. Structure selon la revendication 1, dans laquelle
   le film polymère comprend un homopolymère de polyéthylène téréphtalate et un copolyester, le copolyester présentant un point de fusion inférieur à environ 260°C, et
   le film polymère présente une biréfringence ($n_z$-$n_x$) inférieure à environ 0,15.

7. Structure selon la revendication 6, dans laquelle le film polymère comprend une pluralité de couches, y compris :

   (a) au moins une couche comprenant un homopolymère de polyéthylène téréphtalate, et
   au moins une autre couche comprenant un copolyester ;
   (b) une première couche comprenant un homopolymère de polyéthylène téréphtalate,
   une deuxième couche comprenant un copolyester, et
   une troisième couche comprenant un homopolymère de polyéthylène téréphtalate, la deuxième couche étant disposée entre la première couche et la troisième couche ; ou
   (c) une première couche comprenant un copolyester,
   une deuxième couche comprenant un homopolymère de polyéthylène téréphtalate, et
   une troisième couche comprenant un copolyester, la deuxième couche étant disposée entre la première couche et la troisième couche.

8. Structure selon l'une quelconque des revendications 1 à 7, dans laquelle le film polymère présente une cristallinité inférieure à environ 50%.

9. Structure selon l'une quelconque des revendications 1 à 7, dans laquelle le film polymère présente une cristallinité inférieure à environ 25%.

10. Structure selon l'une quelconque des revendications 1 à 7, dans laquelle le film polymère présente une cristallinité inférieure à environ 10%.

11. Structure selon l'une quelconque des revendications 1 à 7, dans laquelle le film polymère présente une cristallinité d'environ 5%.

**12.** Structure selon l'une quelconque des revendications 1 à 11, dans laquelle le film polymère présente un indice de réfraction ($n_z$) inférieur à environ 1,64.

**13.** Structure selon l'une quelconque des revendications 1 à 11, dans laquelle le film polymère présente un indice de réfraction ($n_z$) compris entre environ 1,57 et environ 1,62.

**14.** Structure selon l'une quelconque des revendications 1 à 13, comprenant en outre une couche de support appliquée sur la couche de matériau sensible à l'énergie microonde, de manière à ce que la couche de matériau sensible à l'énergie microonde soit disposée entre le film polymère et la couche de support, la couche de support comprenant du papier, du papier cartonné, un film polymère ou toute combinaison de ceux-ci.

**15.** Structure selon l'une quelconque des revendications 1 à 14, comprenant au moins une partie d'une construction de chauffage aux microondes, destinée à chauffer, brunir et/ou faire croustiller un produit alimentaire dans un four à microondes.

EP 2 459 624 B1

FIG. 1

FIG. 2

FIG. 3

FIG. 4

FIG. 5

FIG. 6

FIG. 7

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4851632 A
- US 4993526 A
- US 5003142 A
- US 5177332 A
- US 20070084860 A1
- US 5177632 A
- US 5177132 A
- US 5571627 A
- US 5126519 A
- US 5527413 A
- US 709628 A
- US 4943456 A
- US 5002826 A
- US 5118747 A
- US 5410135 A
- US 4283427 A
- US 70957810 A
- US 6204492 B
- US 6433322 B
- US 6552315 B
- US 6677563 B
- US 7019271 B
- US 7351942 B
- US 20080078759 A1
- US 5412187 A
- US 5530231 A
- US 20080035634 A1
- WO 2007127371 A

**Non-patent literature cited in the description**

- **J. BRANDRUP ; E. H. IMMERGUT ; E. A. GRULKE.** Polymer Handbook. John Wiley & Sons, Inc, 1999
- **MALCOLM STEVENS.** Polymer Chemistry, An Introduction 3rd Edition. Oxford University Press, 1999, 344